# EUROPÄISCHE PATENTSCHRIFT

(11) **EP 3 684 529 B1**
(45) Veröffentlichungstag und Bekanntmachung des Hinweises auf die Patenterteilung: **09.06.2021**
(21) Anmeldenummer: 18766240.8
(22) Anmeldetag: 07.09.2018
(51) Int. Cl.: B22F 3/105, B33Y 30/00, B29C 64/20, B29C 64/255, B29C 64/245, B29C 64/153, B29C 64/259, B22F 10/28, B22F 12/00

(54) **BAUZYLINDER FÜR EINE MASCHINE ZUR SCHICHTWEISEN FERTIGUNG DREIDIMENSIONALER OBJEKTE, MIT VERMINDERTEM TEMPERATURGRADIENTEN**
BUILDING CYLINDER FOR A MACHINE FOR THE LAYER-BY-LAYER PRODUCTION OF THREE-DIMENSIONAL OBJECTS, WITH REDUCED TEMPERATURE GRADIENT
CYLINDRE DE CONSTRUCTION POUR MACHINE DE FABRICATION PAR COUCHES SUCCESSIVES D'OBJETS TRIDIMENSIONNELS, PRÉSENTANT UN GRADIENT DE TEMPÉRATURE RÉDUIT

(30) Priorität: 20.09.2017 DE 102017216625
(43) Veröffentlichungstag der Anmeldung: 29.07.2020
(73) Patentinhaber: Trumpf Laser- und Systemtechnik GmbH, 71254 Ditzingen (DE)
(72) Erfinder: PIEGER, Markus, 73240 Wendlingen (DE)
(74) Vertreter: Kohler Schmid Möbus Patentanwälte
(86) Internationale Anmeldenummer: PCT/EP2018/074160
(87) Internationale Veröffentlichungsnummer: WO 2019/057523

(56) Entgegenhaltungen:
- WO-A1-2016/207258
- DE-A1- 10 342 880
- DE-A1-102015 205 314

## Beschreibung

Die Erfindung betrifft einen Bauzylinder für eine Maschine zur schichtweisen Fertigung dreidimensionaler Objekte durch Sintern oder Schmelzen von pulverförmigem Material mit einem Hochenergiestrahl, insbesondere Laserstrahl,
mit einem im Wesentlichen zylindermantelförmigen Grundkörper und einem an der Innenseite des Grundkörpers entlang einer Zylinderachse verfahrbaren Kolben-Teil,
wobei das Kolben-Teil an seiner Oberseite ein Basiselement, insbesondere ein Substrat oder ein Preform, für das Aufwachsen eines dreidimensionalen Objekts aufweist,
und wobei am Kolben-Teil eine an der Innenseite des Grundkörpers anliegende Pulverdichtung zur Abdichtung des pulverförmigen Materials ausgebildet ist.

Eine solche Bauzylinder-Anordnung ist aus der WO 2016/207258 A1 bekannt geworden.

Durch das schichtweise Fertigen dreidimensionaler Objekte mittels Sintern oder Schmelzen mit einem Hochenergiestrahl, insbesondere einem Laserstrahl oder Elektronenstrahl, können Objektgeometrien gefertigt werden, die mit herkömmlichen Techniken (die beispielweise auf einem Gießprozess oder einem Fräsen eines Vollkörpers beruhen) nicht zugänglich sind.

Dabei wird auf einem Basiselement, meist einem Substrat (auch Bauplattform genannt) oder einem Preform, in einem Bauzylinder (auch Baukammer genannt) eine dünne Schicht eines pulverförmigen Materials aufgetragen und dann an ausgewählten Orten mit einem Hochenergiestrahl aufgeheizt, bis das pulverförmige Material aufschmilzt oder sintert. Anschließend wird das Basiselement über ein zugehöriges Kolben-Teil in dem Bauzylinder um eine Schichtdicke des Pulvers abgesenkt, eine weitere Schicht des pulverförmigen Materials aufgetragen und wiederum an ausgewählten Orten durch den Hochenergiestrahl erhitzt, und so fort. Das Auftragen und Erhitzen des pulverförmigen Materials finden meist unter Ausschluss von Luft statt, um Oxidationsprozesse zu vermeiden, insbesondere wenn ein metallisches pulverförmiges Material verarbeitet wird.

Um mechanische Spannungen im fertigen Objekt zu vermeiden, ist es vorteilhaft, das pulverförmige Material vor der Einwirkung des Hochenergiestrahls vorzuwärmen. Durch dieses Vorwärmen, aber auch durch die Schmelz- und Sinterprozesse, kommt es zu einer erheblichen Erwärmung am Bauzylinder, etwa am Basiselement, am Grundkörper oder auch am Kolben-Teil.

Infolge dieser Erwärmung können sich am Bauzylinder Temperaturgradienten ausbilden, die zu einem Materialverzug beispielsweise am Grundkörper führen können und dadurch die Fertigungsgenauigkeit des dreidimensionalen Objekts verringern.

Die Erwärmung des Bauzylinders erschwert zudem eine rasche Fertigungsfolge von Objekten an einer 3D-Druck-Maschine. Um in rascher Folge Objekte an einer 3D-Druck-Maschine zu fertigen, kann der Bauzylinder mitsamt dem beschichteten Basiselement in einem noch heißen Zustand gegen einen neuen Bauzylinder mit einem noch unbeschichteten Basiselement getauscht werden; die weitere Abkühlung des heißen Bauzylinders kann dann abseits der 3D-Druckmaschine erfolgen. Jedoch ist die Handhabung des noch heißen Bauzylinders schwierig. Insbesondere sollte sich der Grundkörper nicht verziehen, und bevorzugt sollte das Objekt im heißen Zustand vor Luftsauerstoff geschützt werden.

Aus der WO 2016/207258 A1 ist eine Bauzylinder-Anordnung für eine 3D-Druckmaschine bekannt geworden, bei der an einem oberen Teil des Kolbens zwischen dem Substrat und einem Klemmring eine Pulverdichtung, etwa aus Metallfasermaterial, angeordnet ist. Für den Grundkörper, an welchem die Pulverdichtung verfährt, wird an der Innenseite ein Material niedriger Wärmeleitfähigkeit vorgeschlagen, etwa Quarzglas. An einem unteren Teil des Kolbens ist eine Kühleinrichtung und eine Gasdichtung aus Elastomermaterial vorgesehen. Zwischen oberem Teil und unterem Teil des Kolbens sind keramische Isolationsbauteile vorgesehen. Der obere Teil des Kolbens ist vom übrigen Teil des Kolbens lösbar, um Grundkörper und Substrat an der Maschine zu tauschen. Unter dem Klemmring können über einen Ringbetätiger mehrere Riegelstege gemeinsam ein- und ausgeschwenkt werden.

Die dort vorgeschlagene Bauform ermöglicht die Handhabung auch von hohen Substrattemperaturen von 500°C und mehr, ist aber aufgrund des Quarzglases am Grundkörper recht teuer und bruchempfindlich, insbesondere bei der Handhabung für einen Transport. Weiterhin treten im Grundkörper vergleichsweise große Temperaturgradienten auf, die Temperaturgradienten im Inneren des Bauzylinders begünstigen können und so zu Fertigungsungenauigkeiten am Objekt führen können. Die großen Temperaturgradienten im Grundkörper bleiben zudem in der Abkühlphase lange erhalten; dadurch wird ein Verziehen des gefertigten Objekts etwa bei einem Ergreifen durch kaltes Handhabungswerkzeuge für einen Transport im heißen Zustand begünstigt.

Aus der nachveröffentlichten deutschen Patentanmeldung 10 2016 211 214.7 ist eine Bauzylinder-Anordnung bekannt geworden, wobei an einem Kolben, der in einem Grundkörper verfährt, eine als umlaufende Fasermetalldichtung ausgebildete Pulverdichtung angeordnet ist. Am Grundkörper ist eine Riegelmechanik mit radial aus- und einfahrbaren Riegeln vorgesehen. Die Riegel können einen oberen Teil des Kolbens untergreifen.

### Aufgabe der Erfindung

Der Erfindung liegt die Aufgabe zugrunde, einen Bauzylinder für eine 3D-Druck-Maschine vorzustellen, mit der eine verbesserte Transportfähigkeit, insbesondere Robustheit, und gleichzeitig eine hohe Fertigungsgenauigkeit eines dreidimensionalen Objekts erreicht werden kann.

### Kurze Beschreibung der Erfindung

Diese Aufgabe wird gelöst durch einen Bauzylinder gemäß Anspruch 1, der dadurch gekennzeichnet ist,
dass das Kolben-Teil einen Dichtungsträger aufweist, an welchem die Pulverdichtung gelagert ist,
dass auf dem Dichtungsträger eine keramische Isolationseinrichtung, insbesondere ein umlaufender Isolationsring, gelagert ist,
und dass auf der Isolationseinrichtung das Basiselement gelagert ist, wobei das Basiselement vom Dichtungsträger und von der Pulverdichtung beabstandet ist.

Im Rahmen der Erfindung wird vorgeschlagen, einen Wärmeeintrag in den Grundkörper dadurch zu begrenzen, dass im Wärmeleitpfad zwischen der Pulverdichtung und der dem Basiselement (etwa ein Substrat bzw. eine Substratplatte, oder auch ein Preform), welches infolge der schichtweisen Fertigung des dreidimensionalen Objekts erwärmt wird, eine keramische Isolationseinrichtung angeordnet wird. Dadurch kann die Temperatur der Pulverdichtung im Vergleich zum Basiselement niedrig gehalten werden.

Die Pulverdichtung wird mit einem Dichtungsträger gehalten, der die auf die Pulverdichtung wirkenden mechanischen Kräfte aufnehmen kann; insbesondere wird die Isolationseinrichtung durch elastische Kräfte auf die Pulverdichtung nicht belastet. Die Isolationseinrichtung bzw. der Isolationsring ist zwischen dem Dichtungsträger und dem Basiselement angeordnet. Das Basiselement berührt den Dichtungsträger und die Pulverdichtung nicht. Die Pulverdichtung ist also vom Basiselement entfernt angeordnet (ausgelagert).

Dadurch wird erreicht, dass im Betrieb oder auch in einer Abkühlphase ein Wärmefluss vom heißen Basiselement in den Dichtungsträger und die Pulverdichtung, und weiter in den Grundkörper, vermindert ist. Entsprechend sind auch alle Temperaturgradienten im Grundkörper vermindert. Ebenso kann eine niedrigere absolute, maximale oder auch durchschnittliche Temperatur des Grundkörpers erreicht werden.

Dadurch ist die Gefahr eines temporären oder auch dauerhaften Verziehens (Verformens) des Grundkörpers infolge von Temperaturgradienten im Grundkörper verringert. Dies trägt zu einer besseren Fertigungsgenauigkeit bei.

Aufgrund der niedrigeren Temperaturgradienten im Grundkörper und auch aufgrund der insgesamt niedrigeren Temperatur des Grundkörpers infolge des geringeren Wärmeeintrags über die Pulverdichtung sind auch Handhabungen bei Transportprozessen vereinfacht. Etwaige lokale Temperaturveränderungen durch das Kontaktieren mit kalten Greifern, Gabeln oder dergleichen wirken sich weniger stark in Verformungen aus.

Die Komponenten des Bauzylinders können so aufeinander abgestimmt werden, dass im Betrieb die Temperaturen von Grundkörper (auf Höhe der Pulverdichtung) und Pulverdichtung näherungsweise gleich sind, und die Wärmeausdehnungskoeffizienten (und bevorzugt auch deren Gradienten) von Grundkörper und Pulverdichtung näherungsweise gleich sind (beispielsweise bis auf eine Temperaturdifferenz von 10°C oder weniger bzw. bis auf eine Differenz von 20% oder weniger, bezogen auf den kleineren Wärmeausdehnungskoeffizienten). Dadurch werden nahezu gleichbleibende (insbesondere bei jeder Temperatur nahezu gleiche) Dichtungskräfte erreicht und entsprechend Verformungen am Basiselement minimiert, wodurch wiederum die Fertigungsgenauigkeit am dreidimensionalen Objekt verbessert wird. Der zylinderrohrförmige Grundkörper wird weiterhin mit möglichst wenig Störungen seiner Gestalt ausgebildet. Zwischen dem Basiselement und Grundkörper kann zudem ein Pulverrand stehen gelassen werden, um die thermische Isolation zu verbessern, was ebenfalls zu einer verbesserten Fertigungsgenauigkeit beiträgt; der Pulverrand ist bevorzugt wenigstens 2 mm breit.

Im Rahmen der Erfindung kann der Grundkörper ohne weiteres ohne Quarzglas, und insbesondere aus Metall (beispielsweise aus Stahl) ausgebildet werden. Dadurch kann der Grundkörper als robuste Rohrkonstruktion ausgebildet werden; eine Bruchgefahr kann vermieden werden. Eine Wärmeleitung durch den Grundkörper etwa zu einer Gasdichtung aus Elastomermaterial im Bereich eines unteren Kolbenteils ist weniger problematisch, da aufgrund der niedrigeren absoluten Temperatur des Grundkörpers im Bereich der Pulverdichtung sich auch eine niedrigere Temperatur an der Gasdichtung oder anderen relevanten Stellen des Grundkörpers einstellt.

Die Pulverdichtung ist typischerweise aus miteinander verpressten Metallfasern ausgebildet. Diese kann eine bessere Oxidationsbeständigkeit erreichen als beispielsweise Graphitdichtungen; zudem kann das thermische Ausdehnungsverhalten von Metallfaserdichtungen leicht eingestellt und insbesondere auf das Material des Grundkörpers abgestimmt werden. Der Dichtungsträger ist typischerweise aus Metall, insbesondere Stahl, gefertigt. Die Isolationseinrichtung ist typischerweise als umlaufender Isolationsring ausgebildet; es ist aber auch eine mehrteilige Isolationseinrichtung möglich. Die Isolationseinrichtung kann beispielsweise aus Al₂O₃ oder anderen Isolationskeramiken gefertigt sein.

Das Basiselement ist typischerweise gegenüber der Innenwand des Grundkörpers radial zurückgesetzt, beispielsweise um 1,5 mm oder mehr; in der Regel berührt das Kolben-Teil nur mit der Pulverdichtung den Grundkörper. Der Spalt zwischen Basiselement und Grundkörper ist während des Bauprozesses typischerweise mit pulverförmigem Material verfüllt, um die Schmelzzone zu isolieren. Das pulverförmige Material ist meist ein Metallpulver, kann aber auch ein Keramikpulver oder ein Kunststoffpulver sein; eine mittlere Korngröße (D50) beträgt typischerweise zwischen 25 µm und 100 µm. Die Prozesstemperatur (Vorwärmtemperatur des pulverförmigen Materials) im Grundkörper beträgt typischerweise 400°C-500°C, oder auch mehr als 500°C. Der Grundkörper als solches ist typischerweise nicht aktiv gekühlt; jedoch ist meist eine aktive Kühlung des Bauzylinders von unten über ein Kolben-Unterteil vorgesehen.

### Bevorzugte Ausführungsformen der Erfindung

### Ausführungsformen betreffend die Isolationseinrichtung

Bei einer bevorzugten Ausführungsform des erfindungsgemäßen Bauzylinders weist der Dichtungsträger einen unteren Dichtungsträgerring und einen oberen Dichtungsträgerring auf, die aufeinander montiert sind und gemeinsam eine außenliegende Führung, insbesondere eine außen umlaufende. Nut, ausbilden, in die die Pulverdichtung eingelegt ist. Die Pulverdichtung ist typischerweise zwischen dem unteren Dichtungsträgerring und dem oberen Dichtungsträgerring eingeklemmt, so dass die Pulverdichtung durch die beiden zusammenmontierten Dichtungsträgerringe elastisch und oder plastisch verformt ist. Die Zweiteiligkeit ermöglicht es, im geteilten Zustand einen Rand der Nut zu entfernen, so dass die Pulverdichtung bei der Montage dann nicht über den (entfernten) Rand gezogen werden muss, was die Pulverdichtung beschädigen könnte.

Vorteilhaft ist eine Weiterbildung dieser Ausführungsform, wobei der untere Dichtungsträgerring und der obere Dichtungsträgerring mittels Schrauben oder mittels einer Bajonettmechanik aneinander fixiert sind. Diese Befestigungsmechanismen sind auch nach einer Vielzahl von Heizzyklen noch gut zu öffnen, etwa um die Pulverdichtung zu warten.

Bei einer bevorzugten Ausführungsform ist die Isolationseinrichtung als ein umlaufender Isolationsring ausgebildet. Der Isolationsring ist einfach zu montieren und vermeidet (gegenüber einer mehrteiligen Ausbildung) Stöße oder Lücken, durch die pulverförmiges Material ins Innere des Kolben-Teils bzw. des Kolbens eindringen könnte. Durch die Öffnung des Rings kann von unten auf das Basiselement eingewirkt werden, etwa mit einer Heizeinrichtung, insbesondere einer Infrarot-Heizeinrichtung, einer Kontaktheizeinrichtung oder einer induktiven Heizeinrichtung.

Vorteilhaft ist auch eine Ausführungsform, die vorsieht, dass ein gegenseitiges Anlageprofil von Basiselement und Isolationseinrichtung im Verlauf von außen nach innen einen entgegen der Schwerkraft verlaufenden Teilabschnitt, insbesondere einen vertikal nach oben verlaufenden Teilabschnitt, aufweist, und dass auch ein gegenseitiges Anlageprofil von Dichtungsträger und Isolationseinrichtung im Verlauf von außen nach innen einen entgegen der Schwerkraft verlaufenden Teilabschnitt, insbesondere einen vertikal nach oben verlaufenden Teilabschnitt, aufweist. Die etwa im Längsschnitt entlang der Zylinderachse erkennbaren, angegebenen Anlageprofile erschweren ein Eindringen von pulverförmigem Material ins Innere des Kolben-Teils bzw. des Kolbens. Oben und unten bezieht sich auf die Orientierung in einem normalen Bauprozess. Man beachte, dass das gegenseitige Anlageprofil auch Abschnitte an voneinander beabstandeten, einander gegenüberliegenden Flächen aufweisen kann.

### Ausführungsformen mit einem Tragring

Bei einer besonders bevorzugten Ausführungsform des erfindungsgemäßen Bauzylinders ist vorgesehen,
dass außen am Grundkörper ein umlaufender Tragring angeordnet ist, in welchem am Innenumfang verteilt mehrere radial nach außen gerichtete Ausnehmungen für Lagerbolzen ausgebildet sind,
dass im Grundkörper um dem Außenumfang des Grundkörpers verteilt mehrere radial nach innen gerichtete Vertiefungen für Lagerbolzen ausgebildet sind, dass mehrere Lagerbolzen vorhanden sind, wobei ein jeweiliger Lagerbolzen in eine Ausnehmung und eine der Ausnehmung gegenüberliegende Vertiefung einragt,
dass ein Innendurchmesser des Tragrings größer ist als ein Außendurchmesser des Grundkörpers,
und dass ein jeweiliger Lagerbolzen in Längsrichtung mit Spiel in seiner Ausnehmung und seiner Vertiefung gelagert ist. Der umlaufende Tragring ermöglicht ein Ergreifen (insbesondere Untergreifen) des Bauzylinders unabhängig von seiner Drehstellung bezüglich der Zylinderachse. Der Tragring wird "schwimmend" am Grundkörper gelagert. Durch die (ausreichend große) Durchmesserdifferenz von Tragring und Grundkörper sowie das (ausreichend große) Spiel der Lagerbolzen kann vermieden werden, dass durch (insbesondere unterschiedliche) thermische Verformungen der Tragring gegenüber dem Grundkörper verspannt wird und entsprechende mechanische Verformungen in den Grundkörper eingebracht werden. Dies verhindert ein "Stocken" des Kolben-Teils beim Vorbeifahren am Tragring; dadurch wird der 3D-Druck präziser. Der Grundkörper kann sich also auch im Bereich des Tragrings ungehindert und insbesondere in gleicher Weise wie die Pulverdichtung ausdehnen. Der Tragring ist typischerweise näherungsweise axial mittig an Grundkörper angeordnet. Typischerweise sind wenigstens drei Lagerbolzen, bevorzugt fünf oder sechs Lagerbolzen, vorgesehen.

Bei einer vorteilhaften Weiterbildung zu dieser Ausführungsform ist eine jeweilige Länge L eines Lagerbolzens größer als die Summe der Tiefe TV seiner zugehörigen Vertiefung und der Tiefe TA seiner zugehörigen Ausnehmung. Durch die (ausreichend große) Länge des Lagerbolzens, mit L> TV+TA, kann sichergestellt werden, dass der Tragring den Grundkörper in keiner Stellung berührt, auch bei hohen Temperaturen am Grundkörper. Dadurch wird der Wärmeabfluss aus dem Grundkörper in den Tragring auf die (geringfügigen) Wärmepfade durch die Lagerbolzen begrenzt, und Temperaturgradienten im Grundkörper im Bereich des Lagerrings sind minimiert. Die Vertiefungen im Grundkörper stellen eine lediglich geringfügige Störung der Grundkörperstruktur dar, so dass hierdurch ebenfalls nur geringfüge Temperaturgradienten erzeugt werden. Bei Vorbeifahren des Kolben-Teils im Rahmen des Bauprozesses sind dann durch Temperaturgradienten bedingte Verformungen ebenfalls minimiert, und ein Stocken wird verhindert. Man beachte, dass TV und TA auf das Spiel der Lagerbolzen in Längsrichtung so abgestimmt sein sollten, dass die Bolzen nicht herausfallen können, auch nicht bei hohen Temperaturen am Basiselement.

Bevorzugt ist eine Weiterbildung, bei der der Tragring mit einem oberen Tragringteil und einem unteren Tragringteil ausgebildet ist, die aufeinander montiert sind und gemeinsam die Ausnehmungen ausbilden. Durch die zweiteilige Ausführung des Tragrings kann dieser für eine einfache Montage der Lagerbolzen geöffnet (geteilt) werden; nach dem Einsetzen der Lagerbolzen in die teilweise geformten Ausnehmungen eines Tragringteils und die Vertiefungen am Grundkörper kann der andere Tragringteil montiert werden.

Bevorzugt ist dabei vorgesehen, dass der untere Tragringteil und der obere Tragringteil mittels Schrauben aneinander fixiert sind. In anderen Fällen kann auch eine Bajonettmechanik eingesetzt werden, um die Tragringteile aneinander zu fixieren. Diese Befestigungsvarianten sind in der Praxis bewährt und auch nach vielen Wärmezyklen noch gut zu öffnen.

### Ausführungsformen zum Steuerring

Bevorzugt ist weiterhin eine Ausführungsform des erfindungsgemäßen Bauzylinders, die vorsieht,
dass am Grundkörper, insbesondere am unteren Ende des Grundkörpers, ein Steuerring, insbesondere ein scheibenförmiger Steuerring, drehbar um die Zylinderachse gelagert ist,
dass der Steuerring eine Außenverzahnung aufweist,
dass am Steuerring in Umfangsrichtung verteilt mehrere Steuerkurven-Ausnehmungen ausgebildet sind, wobei die Steuerkurven-Ausnehmungen bei Fortschreiten in Umfangsrichtung ihre radiale Position ändern,
dass am Grundkörper, insbesondere am unteren Ende des Grundkörpers, in Umfangsrichtung verteilt mehrere Auflagebolzen radial verfahrbar gelagert sind, dass die Auflagebolzen jeweils einen axial ausragenden Mitnehmer aufweisen, der in eine Steuerkurven-Ausnehmung des Steuerrings eingreift,
und dass durch Drehen des Steuerrings die Auflagebolzen zwischen einer nach radial innen ausgefahrenen Stellung, in der der Kolben-Teil auf den Auflagebolzen aufliegen kann, und einer zurückgezogenen Stellung, in der der Kolben-Teil die Auflagebolzen passieren kann, verfahrbar sind. Mit dieser Variante ist ein Untergreifen des Kolben-Teils, an dem das Basiselement (etwa eine Substratplatte) und der Dichtungsträger ausgebildet sind, möglich, um den Bauzylinder mitsamt Basiselement zu tauschen. Die vorgeschlagene Auflagebolzenmechanik ist besonders robust bezüglich seiner Funktionstüchtigkeit, auch bei Anwesenheit von verfahrensüblichen Mengen von pulverförmigem Material. Mit dem Steuerring können gleichzeitig alle Auflagebolzen betätigt werden, was eine besonders schnelle und sichere Handhabung ermöglicht. Über die Außenverzahnung ist eine mechanische Kopplung an einen motorischen Antrieb auf einfache Weise möglich. Die Außenverzahnung ist typischerweise vollständig umlaufend ausgebildet, um von einer Drehorientierung unabhängig zu sein. Typischerweise sind wenigstens drei, bevorzugt fünf oder sechs, Auflagebolzen vorgesehen.

Vorteilhaft ist eine Weiterbildung dieser Ausführungsform, wobei wenigstens ein Federelement vorhanden ist, mit dem der Steuerring in eine Drehposition vorgespannt wird, in der die Auflagebolzen in der nach radial innen ausgefahrenen Stellung sind. Dadurch ist bei einem Transport des Bauzylinders außerhalb der 3D-Druckmaschine sichergestellt, dass der Kolben-Teil untergriffen bleibt.

### Ausführungsformen zum Deckel

Bevorzugt ist auch eine Ausführungsform, die vorsieht,
dass der Bauzylinder einen Deckel zum Verschießen des Bauzylinders an einer Oberseite aufweist,
dass eine umlaufende Dichtung, insbesondere Dichtungsfolie, vorgesehen ist,
die bei aufgesetztem Deckel zwischen einem deckelseitigen Auflageabschnitt und einem grundkörperseitigen Auflageabschnitt angeordnet ist,
und dass der deckelseitige Auflageabschnitt, insbesondere dessen Krümmung, und der grundkörperseitige Auflageabschnitt, insbesondere dessen Krümmung, so ausgebildet sind, dass sich bei aufgesetztem Deckel ein im Wesentlichen linienhafter Krafteintrag in die Dichtung, insbesondere Dichtungsfolie, ergibt. Mittels der sich Unebenheiten in den Auflageabschnitten anpassenden Dichtung, insbesondere Dichtungsfolie, und dem linienhaften Krafteintrag, der allein durch Schwerkraft des Deckels große lokale Andruckkräfte bewirken kann, ist eine besonders gute Dichtigkeit gegenüber Gas, insbesondere Luftsauerstoff, erreichbar.

Vorteilhaft ist eine Weiterbildung dieser Ausführungsform, wobei im Längsschnitt entlang der Zylinderachse der Krümmungsradius des deckelseitigen Auflageabschnitts und der Krümmungsradius des grundkörperseitigen Auflageabschnitts im Bereich des linienhaften Krafteintrags ein unterschiedliches Vorzeichen haben und sich betragsmäßig unterscheiden, insbesondere wobei der deckelseitige Auflageabschnitt mit konvexer Krümmung mit größerem Betrag des Krümmungsradius und der grundkörperseitige Auflageabschnitt mit konkaver Krümmung und kleinerem Betrag des Krümmungsradius ausgebildet sind. Durch die unterschiedliche Krümmung ist auf einfache Weise in linienhafter Krafteintrag zu erreichen. Mit den gekrümmten Flächen kann zudem eine scharfe, schlecht abzudichtende Kante vermieden werden. Der linienhafte Krafteintrag liegt über den gesamten Umfang vor.

Bevorzugt ist eine Weiterbildung, bei der die Dichtung, insbesondere Dichtungsfolie, seitlich am Deckel befestigt ist, insbesondere wobei der Deckel zumindest im radialen Randbereich mit einem oberen Deckelteil und einem unteren Deckelteil ausgebildet ist, die aufeinander montiert sind und zwischen denen ein Teil der Dichtung, insbesondere Dichtungsfolie, einklemmt ist. Die seitliche Anordnung hat sich in der Praxis bewährt, und ist insbesondere leicht zugänglich und benötigt nur wenig Dichtungsmaterial. Die Klemmbefestigung ist auch bei hohen Temperaturen stabil und ermöglicht bei Bedarf (nach Verschleiß) einen einfachen Austausch der Dichtung oder Dichtungsfolie, Die Deckelteile sind typischerweise miteinander verschraubt.

Besonders bevorzugt ist eine Weiterbildung, bei der die Dichtung, insbesondere Dichtungsfolie, aus Reingrafit besteht. Das Reingrafit kann mit dem linienhaften Krafteintrag leicht plastisch verformt werden, und bildet dann eine besonders gute Dichtigkeit aus. Zudem ist Grafit an Luft bei mittleren Temperaturen gut oxidationsbeständig.

Bei einer vorteilhaften Weiterbildung ist vorgesehen, dass der Grundkörper am oberen, dem Deckel zugewandten Ende eine sich in Richtung axial nach innen radial verengende Kontur ausbildet, und/oder der Deckel an einer unteren, dem Grundkörper zugewandten Seite eine sich in Richtung axial nach außen radial verjüngende Kontur aufweist. Dadurch kann der Deckel beim Aufsetzen in die richtige, abdichtende Position geführt werden.

### Allgemeine Ausführungsformen

Bevorzugt ist auch eine Ausführungsform, bei der die Seitenwände des Grundkörpers, die das Kolben-Teil führen, zumindest innenseitig, und bevorzugt vollständig, aus Metall, bevorzugt Stahl, besonders bevorzugt Feinkornbaustahl, gefertigt sind. Dadurch wird der Grundkörper besonders kostengünstig und robust, insbesondere im Vergleich zu Ausführungen mit Quarzglas. Das allgemein gut wärmeleitfähige Metall vermindert zudem Temperaturgradienten im Grundkörper.

In den Rahmen der vorliegenden Erfindung fällt auch eine Maschine zur schichtweisen Fertigung dreidimensionaler Objekte durch Sintern oder Schmelzen von pulverförmigem Material mit einem Hochenergiestrahl, insbesondere Laserstrahl, umfassend
- eine Prozesskammer, mit einem Pulverzylinder-Anschluss für einen Pulverzylinder, einem Bauzylinder-Anschluss für einen Bauzylinder und einem Schieber zum Aufbringen einer Schicht des pulverförmigen Materials im Bauzylinder,
- wenigstens einen Pulverzylinder für das pulverförmige Material, mit einem im Pulverzylinder beweglichen Boden,
- wenigstens einen erfindungsgemäßen, oben beschriebenen Bauzylinder,
- eine Hochenergiestrahl-Quelle, insbesondere ein Bearbeitungslaser,
- eine Scaneinrichtung für den Hochenergiestrahl, insbesondere eine Scanneroptik,
- eine erste Hebeeinrichtung für den Pulver-Kolben eines am Pulverzylinder-Anschluss montierten Pulverzylinders;
- eine zweite Hebeeinrichtung für das Kolben-Teil eines am Bauzylinder-Anschluss montierten Bauzylinders. An der Maschine (3D-Druckmaschine) können dreidimensionale Objekte mit großer Fertigungsgenauigkeit hergestellt werden, und der Transport des Bauzylinders ist vereinfacht möglich. Die Maschine ist insbesondere für eine Fertigung dreidimensionaler Objekte bei Temperaturen des aufzuschmelzenden oder zu sinternden pulverförmigen Materials von ca. 400°C-500 °C oder auch darüber geeignet.

Bevorzugt ist eine Ausführungsform der erfindungsgemäßen Maschine, die vorsieht, dass die zweite Hebeeinrichtung umfasst
- ein Kolben-Zwischenteil, wobei das Kolben-Zwischenteil am Kolben-Teil mit einer Arretiereinrichtung arretierbar und lösbar ist, und mit einer Heizeinrichtung für das Basiselement eines arretierten Kolben-Teils,
- ein Kolben-Unterteil mit einer Kühleinrichtung, wobei am Kolben-Unterteil eine Gasdichtung, insbesondere aus Elastomermaterial, angeordnet ist,
wobei zwischen Kolben-Zwischenteil und Kolben-Unterteil eine thermische Isolierung, insbesondere eine keramische Isolierplatte, angeordnet ist, und wobei für den Bauprozess das Kolben-Zwischenteil zusammen mit dem arretierten Kolben-Teil und dem Kolben-Unterteil im Grundkörper eines am Bauzylinder-Anschluss angeschlossenen Bauzylinders verfahrbar ist. Mit diesem Aufbau lässt sich während des Bauprozesses eine gute Gasdichtigkeit des Bauzylinders gewährleisten, und gleichzeitig eine hohe Pulvertemperatur einstellen. Gegebenenfalls kann das Kolben-Unterteil auch ohne aktive Kühleinrichtung ausgebildet sein.

Ebenfalls in den Rahmen der vorliegenden Erfindung fällt eine Maschinen-Anordnung, umfassend eine erfindungsgemäße, oben beschriebene Maschine, mehrere oben beschriebene, erfindungsgemäße Bauzylinder, und weiterhin wenigstens eine Flurfördereinrichtung, mit der ein Bauzylinder zur Maschine, insbesondere zum Bauzylinder-Anschluss, und/oder von der Maschine weg, insbesondere vom Bauzylinder-Anschluss weg, verbracht werden kann, insbesondere wobei die Flurfördereinrichtung eine Gabel zum Untergreifen eines Tragrings eines Bauzylinders aufweist,
und insbesondere wobei die Flurfördereinrichtung einen Greifer aufweist, mit dem ein Deckel des Bauzylinders niedergehalten werden kann. Mit der Maschinen-Anordnung können in rascher Folge in den Bauzylindern dreidimensionale Objekte schichtweise gefertigt werden. Mit der Flurfördereinrichtung (Flurförderfahrzug) können die Bauzylinder von der Maschine zu einem Zwischenlager verbracht werden, um dort abzukühlen, ohne dass die Maschine blockiert wird. An dieser können mit den weiteren Bauzylindern weiter dreidimensionale Objekte schichtweise gefertigt werden. Mit dem Greifer kann ein unbeabsichtigtes Öffnen des Deckels, etwa durch Beschleunigungskräfte beim Anfahren der Flurfördereinrichtung, vermieden werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Schrägansicht einer Ausführungsform eines erfindungsgemäßen Bauzylinders;
- Fig. 2: einen schematischen Längsschnitt durch den Bauzylinder von Fig. 1;
- Fig. 3: einen vergrößerten Ausschnitt aus Fig. 2 im Bereich einer Isolationseinrichtung, siehe Kasten III;
- Fig. 4: eine schematische Explosionsdarstellung einer Variante eines Dichtungsträgers für die Erfindung;
- Fig. 5: eine schematische Ansicht des Bauzylinders von Fig. 1, mit dem Tragring in Explosionsdarstellung;
- Fig. 6: einen vergrößerten Ausschnitt aus Fig. 2 im Bereich des Tragrings, siehe Kasten VI;
- Fig. 7: eine Querschnittsansicht durch den Bauzylinder von Fig. 2, kurz oberhalb des Steuerrings, siehe Ebene VII;
- Fig. 8: eine Querschnittsansicht durch den Bauzylinder von Fig. 2, auf Höhe der Auflagebolzen, siehe Ebene VIII;
- Fig. 9: eine schematische, geschnittene Schrägansicht durch den Bauzylinder von Fig. 2, mit nach innen ausgefahrenen Auflagebolzen;
- Fig. 10: einen vergrößerten Ausschnitt aus Fig. 2 im Bereich des Randes eines Deckels, siehe Kreis X;
- Fig. 11: einen vergrößerten Ausschnitt aus Fig. 10 im Bereich der Auflageabschnitte, siehe Kreis XI;
- Fig. 12: eine schematische Ansicht einer Ausführungsform einer erfindungsgemäßen Maschine zur schichtweisen Fertigung dreidimensionaler Objekte;
- Fig. 13: eine schematische Seitenansicht eines Kolben-Zwischenteils und eines Kolben-Unterteils für eine erfindungsgemäße Maschine;
- Fig. 14: eine schematische Perspektivansicht einer Flurfördereinrichtung für eine erfindungsgemäße Maschinen-Anordnung.

### Überblick

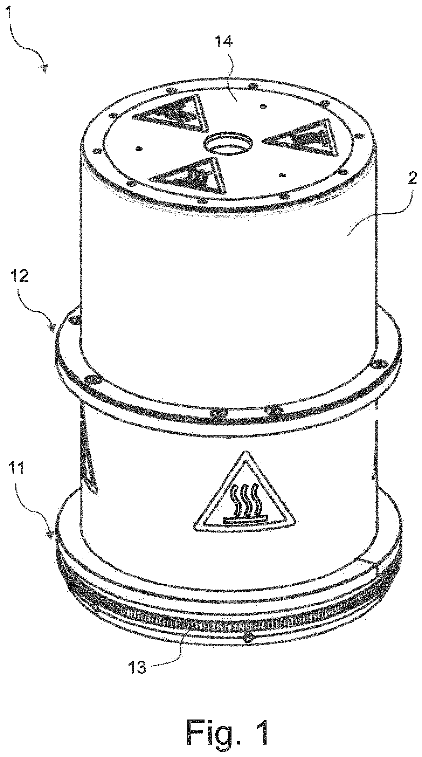

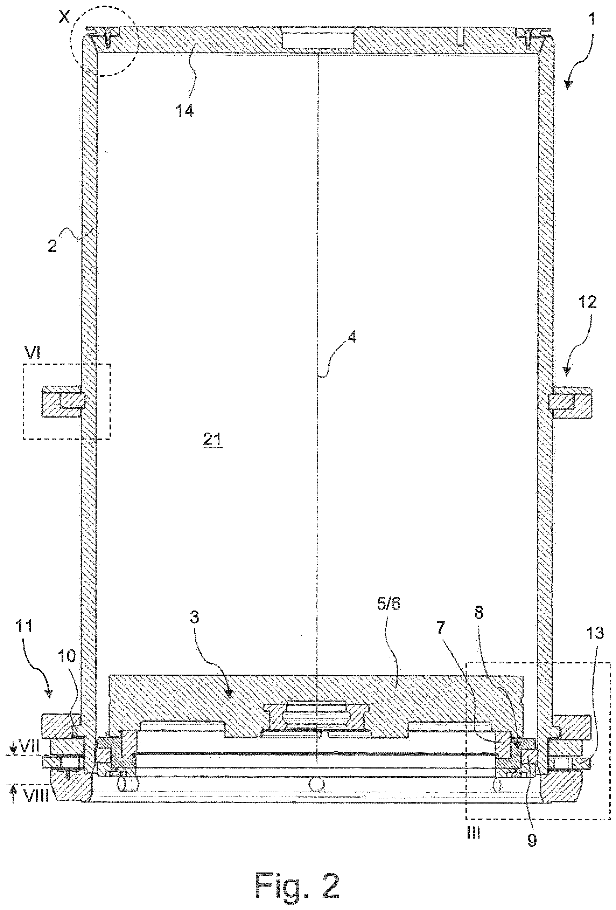

Die **Fig. 1** und die **Fig. 2** zeigen in Perspektivansicht und im Längsschnitt eine Ausführungsform eines erfindungsgemäßen Bauzylinders 1.

Der Bauzylinder 1 weist einen im Wesentlichen zylinderförmigen Grundkörper 2 aus hier Feinkornbaustahl auf, in welchem ein Kolben-Teil 3 (auch bezeichnet als Kolben-Oberteil) entlang einer Zylinderachse 4 verfahrbar ist.

Der Kolben-Teil 3 verfügt über ein Basiselement 5, hier ein Substrat 6, auf welchem ein oder mehrere dreidimensionale Objekte (nicht dargestellt) schichtweise aufgewachsen werden können. Dabei wird der Raum 21 oberhalb des Basiselements 5 allmählich mit dem oder den dreidimensionalen Objekten und pulverförmigem Material (nicht dargestellt) erfüllt; man beachte, dass der Bauprozess in einer nach oben gefahrenen Position des Kolben-Teils 3 beginnt (nicht dargestellt), und der Kolben-Teil 3 während des Bauprozesses im Grundkörper 2 schrittweise abgesenkt wird.

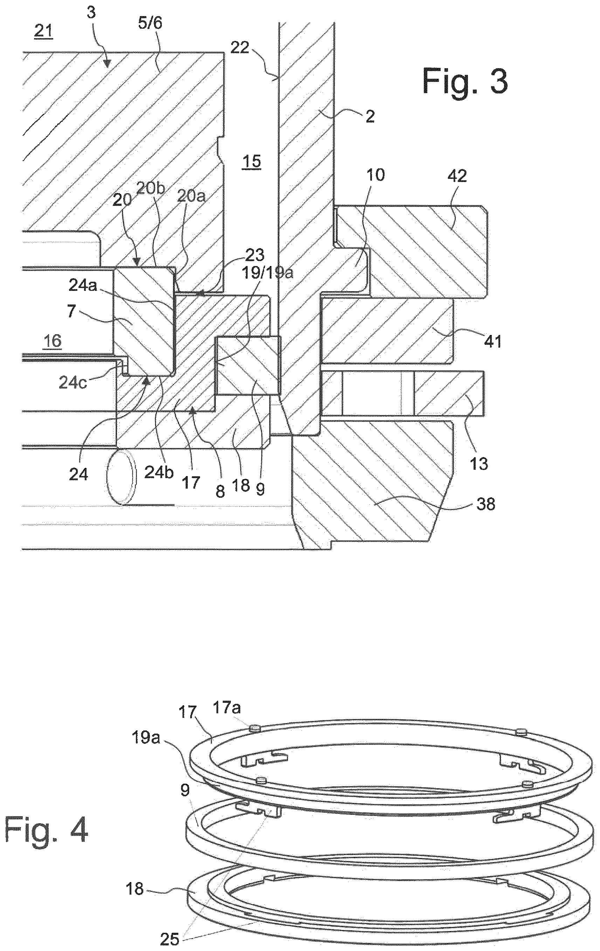

Das Basiselement 5 liegt auf einer keramischen Isolationseinrichtung 7 auf, die sich ihrerseits an einem hier zweiteiligen Dichtungsträger 8 abstützt. Die Isolationseirichtung 7 ist hier vollständig umlaufend ringförmig und einteilig ausgebildet. Im Dichtungsträger 8 ist eine Pulverdichtung 9 gehalten, die an der Innenseite des Grundkörpers 2 anliegt (mehr dazu unter Fig. 3 und 4).

Der Grundkörper 2 ist innen und im Wesentlichen auch außen glatt ausgebildet, und weist mit Ausnahme eines Klemmbundes 10 einer Auflagebolzenmechanik 11 keine umlaufenden Absätze oder Bünde auf. Das Material des Grundkörpers 2 ist bevorzugt gut wärmeleitfähig, etwa mit einer Wärmeleitfähigkeit (bei Raumtemperatur) von wenigstens 20 W/(m*K) oder mit wenigstens 40 W/(m*K); meist ist der Grundkörper 2 aus Stahl gefertigt.

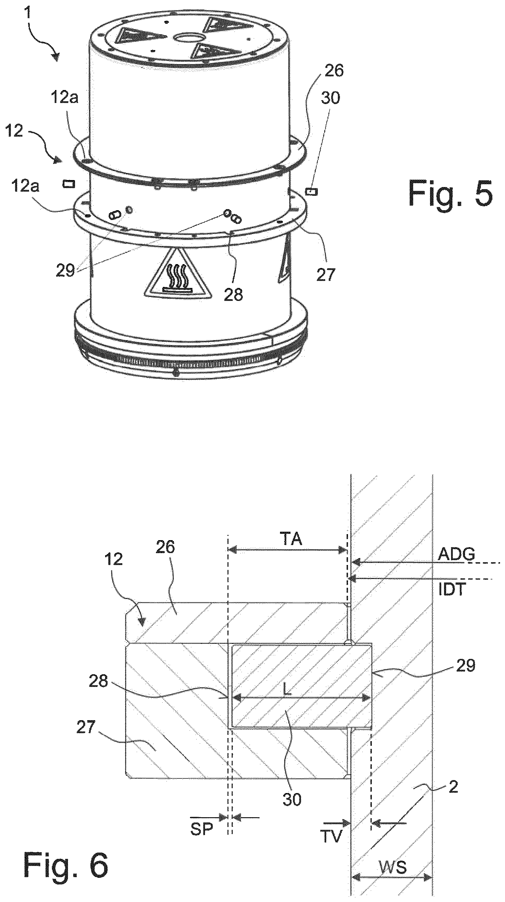

Etwa axial mittig ist ein Tragring 12 ausgebildet, der schwimmend am Grundkörper 2 gelagert ist (mehr dazu bei Fig. 5 und 6).

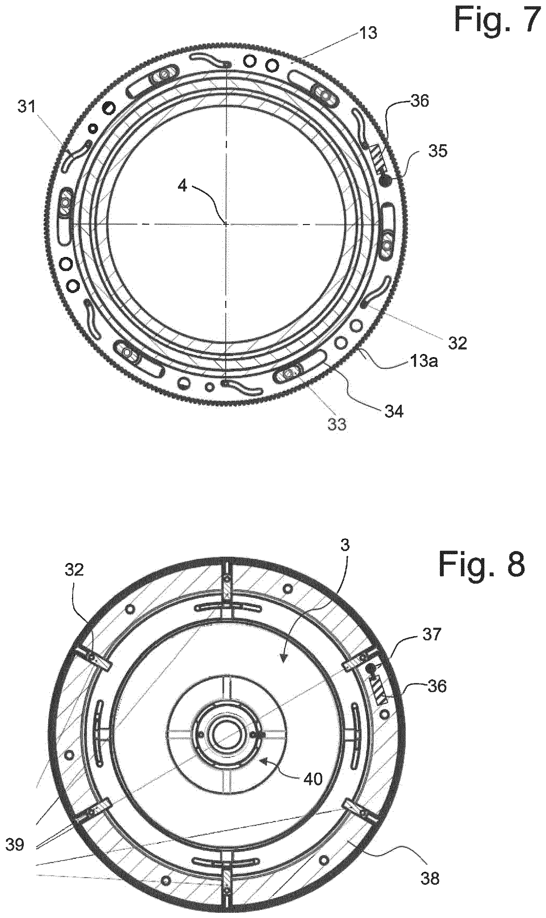

Der Kolben-Teil 3 kann mit der bereits erwähnten Auflagebolzenmechanik 11 unterstützt werden, die unten am Grundkörper 2 ausgebildet ist, so dass der Kolben-Teil 3 nicht nach unten aus dem Grundkörper 2 fallen kann. Die Auflagebolzenmechanik 11 verfügt über einen außenverzahnten, hier scheibenförmigen Steuerring 13 (mehr dazu bei Fig. 7, 8 und 9).

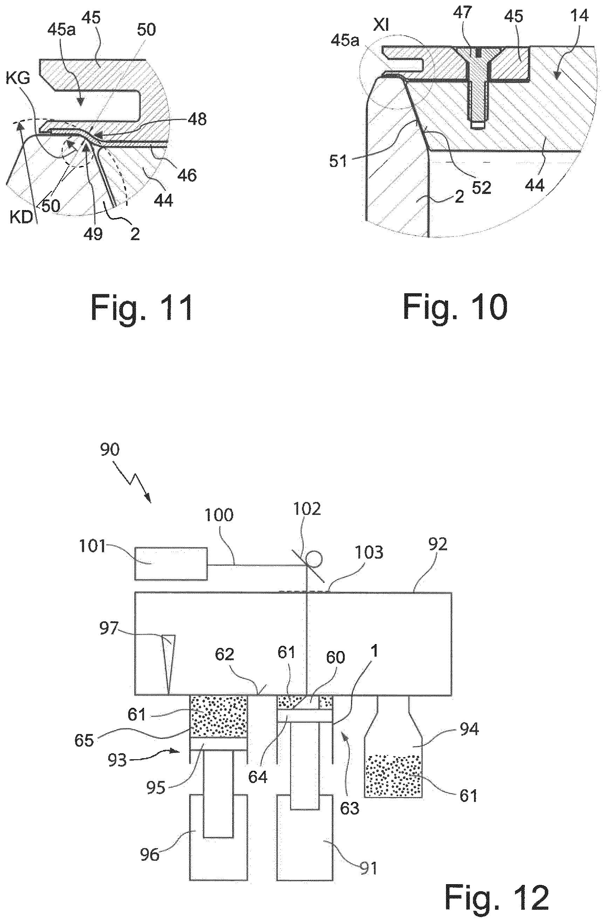

Die Oberseite des Grundkörpers 2 ist mit einem Deckel 14 verschlossen (mehr dazu bei Fig. 11 und 12).

### Zur Isolationseinrichtung

In Fig. 3 wird im Längsschnitt der Bereich um die Isolationseinrichtung 7 näher erläutert. Die keramische Isolationseinrichtung 7 ist hier aus Al₂O₃ gefertigt und trägt das Basiselement 5 bzw. das Substrat 6. Ein gegenseitiges Anlageprofil 20 umfasst hier (von radial außen nach innen gesehen) einen gegen die Schwerkraft, hier vertikal nach oben, verlaufenden Teilabschnitt 20a, und einen horizontal verlaufenden Teilabschnitt 20b. Der Teilabschnitt 20a erschwert es pulverförmigem Material vom Spalt 15 zwischen Grundkörper 2 und Substrat 6 ins Kolbeninnere 16 zu gelangen.

Die Isolationseinrichtung 7 liegt ihrerseits auf dem Dichtungsträger 8 auf. Der Dichtungsträger 8 ist zweiteilig ausgebildet, mit einem oberen Dichtungsträgerring 17 und einem unteren Dichtungsträgerring 18, die in in Fig. 3 nicht näher dargestellter Weise aufeinander montiert und insbesondere axial aneinander festgelegt sind. Gemeinsam bilden sie eine außenliegende Führung 19, nämlich eine Nut 19a aus, in der die Pulverdichtung 9 angeordnet ist. Die Pulverdichtung 9 steht radial gegenüber dem Dichtungsträger 8 über. Die Pulverdichtung 9 ist hier eine Fasermetalldichtung, die in axialer Richtung zwischen den Dichtungsträgerringen 17, 18 eingeklemmt ist. Die Pulverdichtung 9 liegt zudem unter radialer elastischer Spannung an der Innenseite 22 des Grundkörpers 2 an.

Das Substrat 6 ist durch einen kleinen Spalt 23 von der Oberseite des oberen Dichtungsträgerrings 17 beabstandet. Ein gegenseitiges Anlageprofil 24 von Isolationseinrichtung 7 und oberem Dichtungsträgerring 17 umfasst (von radial außen nach innen gesehen) hier einen vertikal nach unten verlaufenden Teilabschnitt 24a, einen horizontal verlaufenden Teilabschnitt 24b und einen entgegen der Schwerkraft, hier vertikal nach oben, verlaufenden Teilabschnitt 24c. Der Teilabschnitt 24c erschwert es wiederum pulverförmigem Material vom Spalt 15 zwischen Grundkörper 2 und Substrat 6 ins Kolbeninnere 16 zu gelangen.

**Fig. 4** illustriert beispielhaft eine mögliche Montage eines zweiteiligen Dichtungsträgers und einer Pulverdichtung 9 für die Erfindung. Auf dem unteren Dichtungsträgerring 18 wird zunächst die Pulverdichtung 9 spannungsfrei angeordnet. Sodann wird der obere Dichtungsträgerring 17 aufgesetzt und befestigt, hier festgedreht, wobei eine Bajonettmechanik 25 genutzt wird. Obwohl die Pulverdichtung 9 in die entstehende Nut 19a radial nach innen eingreift, ist für die Montage kein elastisches Spreizen der Pulverdichtung 9 nötig.

Die Pulverdichtung 9 ist dazu ausgebildet, pulverförmiges Material zwischen Kolben-Teil 3 und Grundkörper 2 in axialer Richtung nicht oder allenfalls in geringen Mengen (insbesondere so dass die Auflagebolzenmechanik nicht beeinträchtigt wird) hindurchzulassen; zudem stellt sie auch beim Transport des Bauzylinders ein Erschwernis für das Eindringen von Luftsauerstoff in den Raum 21 dar (vgl. Fig. 3).

Am oberen Dichtungsträgerring 17 sind hier noch Zentrierstifte 17a für entsprechende Rücksprünge an einer aufzulegenden Isolationseinrichtung (nicht dargestellt) vorgesehen.

### Zum Tragring

In **Fig. 5** ist der Tragring 12 in Explosionsdarstellung gezeigt. Der Tragring 12 ist zweiteilig mit einem oberen Tragringteil 26 und einem unteren Tragringteil 27 ausgebildet. Im montierten Zustand werden durch die Tragringteile 26, 27 mehrere Ausnehmungen 28 ausgebildet, die sich von einer radialen Innenseite des Tragrings 12 nach radial außen erstrecken und in Umfangsrichtung verteilt angeordnet sind. Weiterhin sind am Grundkörper 2 in Umfangsrichtung verteilt mehrere Vertiefungen 29 nach radial innen ausgebildet.

Zum Montage des Tragrings 12 werden zunächst Lagerbolzen 30 in die Vertiefungen 29 eingeführt, dann der untere Tragringteil 27 von unten an die Lagerbolzen 30 herangefahren, wobei die Lagerbolzen teilweise in die Ausnehmungen 28 reichen, und sodann wird von oben der obere Tragringteil 26 auf den unteren Tragringteil 27 verfahren und befestigt, hier verschraubt, vgl. Verschraubungslöcher 12a.

Wie in **Fig. 6** angedeutet, ist der Innendurchmesser IDT des Tragrings 12 größer als der Außendurchmesser ADG des Grundkörpers 2. Weiterhin ist die Summe aus der radialen Tiefe TV einer Vertiefung 29 und der radialen Tiefe TA einer Ausnehmung 28 größer als die Länge L eines Lagerbolzens 30 in radialer Richtung; weiterhin hat ein Lagerbolzen 30 ein nicht verschwindendes radiales Spiel SP zwischen Grundkörper 2 und Tragring 12. Dies gilt für Temperaturen von Raumtemperatur (etwa 20°C) bis zu einer Betriebstemperatur (typischerweise ca. 400-500°C) im Grundkörper 2 bei der Fertigung der dreidimensionalen Objekte. Dadurch wird sichergestellt, dass der Tragring 2 den Grundkörper 2 nicht berührt und somit eine Wärmeleitung in den Tragring 2 minimiert wird. Zudem kann sich vom Tragring 12 keine mechanische Spannung auf den Grundkörper 2 übertragen und diesen verformen.

Bevorzugt bestehen die Lagerbolzen 30 aus einem schlecht wärmeleitenden Material, etwa hochlegiertem austenitischem Stahl oder einer Keramik, bevorzugt mit einer Wärmeleitfähigkeit von weniger als 20 W/(m*K), besonders bevorzugt mit einer Wärmeleitfähigkeit von weniger als 3 W/(m*K). Die Tiefe TA der Ausnehmungen 28 ist bevorzugt deutlich kleiner als die Wandstärke WS des Grundkörpers 2, bevorzugt mit TV≤0,33*WS, besonders bevorzugt TV≤0,25*WS.

### Zur Auflagebolzenmechanik

Die Fig. 7 zeigt einen Steuerring 13 für die Auflagebolzenmechanik. Der Steuerring 13 ist drehbar um die Zylinderachse 4 gelagert und weist eine Außenverzahnung 13a auf, über die eine Kopplung an einen motorischen, typischerweise automatisch gesteuerten Antrieb (nicht dargestellt) erfolgt; der Antrieb erfolgt bevorzugt über ein mechanisches Kopplungsgetriebe mit Kurvenuntersetzung und einen pneumatischen Linearaktor.

Am Steuerring 13 sind Steuerkurven-Ausnehmungen 31 vorgesehen, in die jeweils ein axial auskragender Mitnehmer 32 eines Auflagebolzens eingreift. Die Steuerkurven-Ausnehmungen 31 verlaufen hier jeweils bei Fortschritt in Umfangsrichtung vom (von innen aus gesehen) rechten Ende von radial weiter innen zu einem radial weiter außen liegenden linken Ende. Bei Drehung des Steuerrings 13 in Fig. 7 mit dem Uhrzeigersinn werden daher die Mitnehmer 32 radial nach außen bewegt. Umgekehrt können dann durch Bewegen des Steuerrings 13 gegen den Uhrzeigersinn die Mitnehmer 32 wieder nach radial innen bewegt werden.

Der Steuerring 13 wird weiterhin an Führungsausnehmungen 34 von Führungselementen 33 durchragt, die die Drehbarkeit des Steuerrings 13 sicherstellen. Weiterhin ist am Steuerring 13 ein erster Kopplungsbolzen 35 befestigt, der an ein Federelement 36, hier eine Zugfeder, angebunden ist.

**Fig. 8** illustriert einen unteren Lagerring 38 der Auflagebolzenmechanik. Im unteren Lagerring 38 sind die Auflagebolzen 39 in radialer Richtung linear verfahrbar gelagert. Im unteren Lagerring 38 ist weiterhin ein zweiter Kopplungsbolzen 37 ausgebildet, an den ebenfalls das Federelement 36 angebunden ist. Die Zugkraft des Federelements 36 spannt den Steuerring in die in Fig. 7 gezeigte Drehposition vor, in der die Mitnehmer 32 der Auflagebolzen 39 radial nach innen geschoben sind, und entsprechend die Auflagebolzen 39 radial nach innen verfahren sind, wie in Fig. 8 gezeigt. Das Federelement 36 ist in einem nicht näher dargestellten Zwischenraum angeordnet.

Durch Drehen des Steuerrings können die radial geführten Auflagebolzen 39 über die Mitnehmer 32 radial aus- und eingefahren werden.

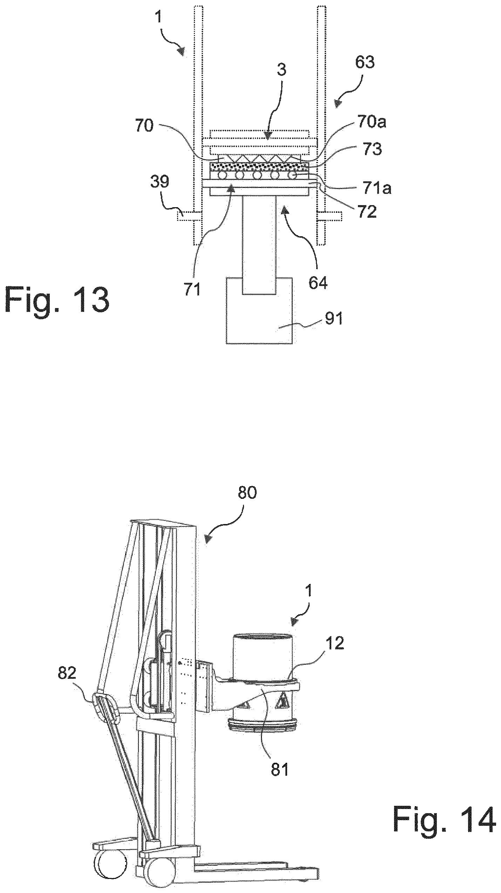

In Fig. 8 ist auch ein Teil einer Arretiereinrichtung (Kopplungsmechanik) 40 zur Anbindung des Kolben-Teils 3 an ein Kolben-Zwischenteil (nicht dargestellt, vgl. hierzu Fig. 13) erkennbar.

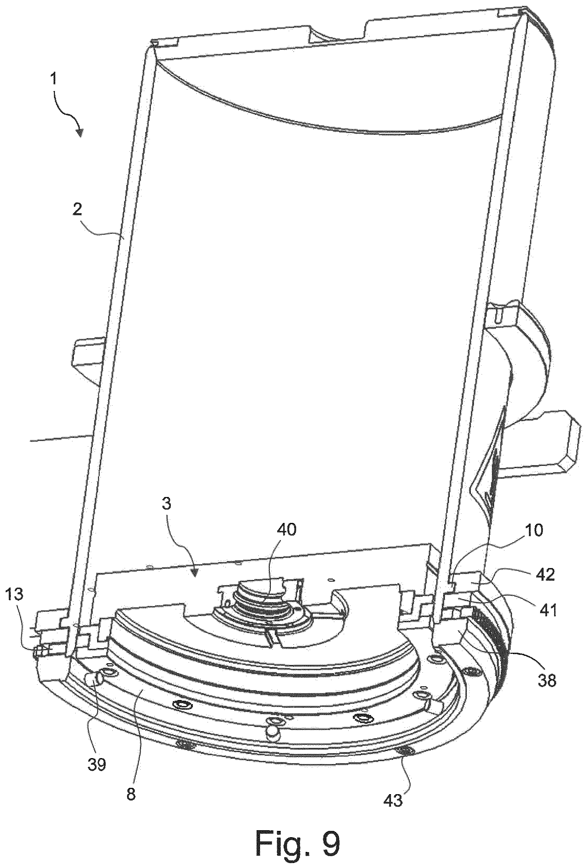

Die radial nach innen ausgefahrenen Auflagebolzen 39 sind auch in der Ansicht des Bauzylinders 1 der **Fig. 9** gut erkennbar. Auf den Auflagebolzen 39 liegt das Kolben-Teil 3 mit der Unterseite des Dichtungsträgers 8 auf.

Der untere Lagerring 38 ist über Schrauben 43, die in den Führungselementen verlaufen, mit einem mittleren Lagerring 41 und einem oberen Lagerring 42 verbunden, wobei zwischen dem mittleren Lagerring 41 und dem oberen Lagerring 42 der Klemmbund 10 des Grundkörpers 2 eingeklemmt ist.

### Zum Deckel

Die **Fig. 10** und in einem vergrößerten Ausschnitt die **Fig. 11** zeigen den Rand des Grundkörpers 2 im Bereich von dessen Oberseite, die für einen Transport (etwa von eine 3D-Druckmaschine zu einem Abkühllager) mit dem Deckel 14 verschlossen ist; man beachte, dass während einer Bearbeitung die Oberseite geöffnet bleibt, um den Zugang eines Hochenergiestrahls zum Basiselement bzw. einem auf diesem bereits teilgefertigten Objekt zu gewährleisten (vgl. dazu Fig. 12).

Der Deckel 14 ist hier zweiteilig ausgebildet, mit einem unteren Deckelteil 44, das sich über die gesamte Breite des Deckels 14 erstreckt, und einem oberen Deckelteil 45, der sich lediglich in einem radialen Randbereich erstreckt. Zwischen dem oberen Deckelteil 45 und dem unteren Deckelteil 44 ist eine Dichtungsfolie 46 eingeklemmt; die Deckelteile 44, 45 sind mit Schrauben 47 aufeinander montiert. Die Dichtungsfolie 46 steht gegenüber dem unteren Deckelteil 44 radial (seitlich nach außen) über, nicht aber gegenüber dem oberen Deckelteil 45.

Die Dichtungsfolie 46 liegt bei aufgesetztem (geschlossenem) Deckel 14 an einem deckelseitigen, gekrümmten Auflageabschnitt 48 und einem grundkörperseitigen, gekrümmten Auflageabschnitt 49 an. Der Krümmungsradius KD (illustriert durch einen gestrichelten Kreisausschnitt) des konkaven deckelseitigen Auflageabschnitts 48 ist betragsmäßig deutlich größer als der Krümmungsradius KG (illustriert durch einen gestrichelten Vollkreis) des konvexen grundkörperseitigen Auflageabschnitts 49. Dadurch ergibt sich bereits durch die Gewichtskraft des Deckels 14 ein im Wesentlichen linienhafter Krafteintrag 50 in die Dichtungsfolie 46, der lokal besonders hohe Kräfte für eine plastische Verformung der Dichtungsfolie 46 bereitstellt.

Die hier aus Reingraphit bestehende Dichtungsfolie 46 schmiegt sich durch die plastische Verformung exakt an die Auflageabschnitte 48, 49 und deren Unebenheiten bzw. Rauigkeit an, und erreicht damit eine besonders gute Dichtwirkung über den gesamten Umfang. Nach einmaligem Gebrauch (einmaligem Austausch des mit dem Deckel 14 in einer Abkühlphase abgedichteten Bauzylinders an einer 3D-Druck-Maschine) wird die Dichtungsfolie 46 typischerweise ausgetauscht.

Der Grundkörper 2 bildet hier am oberseitennahen Ende eine sich axial nach innen hin radial verengende Kontur (flache Fase) 51 aus. Der Deckel 14 bzw. der untere Deckelteil 44 bildet an seiner Unterseite eine gegengleiche, sich axial nach außen (unten) hin radial verjüngende Kontur (flache Fase) 52 aus. Dadurch kann beim Aufsetzen des Deckels 14 auf den Grundkörper 2 eine gegenseitige Führung und Zentrierung erfolgen.

Der Deckel 14 ist bevorzugt aus Stahl gefertigt; er kann zusätzlich durch eine galvanische Schicht aus Chrom oder mit einer chemischen Nickelschicht gegen Korrosion geschützt sein. Der obere Deckelteil 45 verfügt hier über eine umlaufende Kerbe 45a, um die Handhabung des Deckels 14 zu erleichtern.

### Erfindungsgemäße 3D-Druckmaschine

Die **Fig. 12** zeigt in einer schematischen Seitenansicht eine Ausführungsform einer erfindungsgemäßen Maschine 90 zur schichtweisen Fertigung eines dreidimensionalen Objekts 60 (oder auch mehrerer dreidimensionaler Objekte), auch genannt 3D-Druck-Maschine.

Die Maschine 90 umfasst eine gasdichte Prozesskammer 92, die in nicht näher dargestellter Weise mit einem Inertgas (Schutzgas), etwa Stickstoff oder einem Edelgas wie Argon, gefüllt und/oder gespült werden kann.

An die Prozesskammer 92 angeschlossen ist eine Pulverzylinder-Anordnung 93 mit einem Pulverzylinder (Vorratszylinder) 65 für ein pulverförmiges Material 61 (gepunktet dargestellt), aus dem das dreidimensionale Objekt 60 hier durch Sintern oder Schmelzen gefertigt wird. Das pulverförmige Material 61 kann beispielsweise aus Metallpartikeln mit einer mittleren Korngröße (D50) von 25-100 µm bestehen. Durch schrittweises Hochfahren eines Pulver-Kolbens 95 mit einer ersten Hebeeinrichtung (Pulver-Hubeinrichtung) 96 wird eine kleine Menge des pulverförmigen Materials 61 über das Niveau des Bodens 62 der Prozesskammer 92 angehoben, so dass mit einem motorisch betätigbaren Schieber 97 diese kleine Menge zu einer Bauzylinder-Anordnung 63 mit einem erfindungsgemäßen Bauzylinder 1 (etwa ausgebildet wie in Fig. 1 dargestellt) verbracht werden kann.

Die ebenfalls an die Prozesskammer 92 angeschlossene Bauzylinder-Anordnung 63 verfügt über den Kolben 64, auf dem oberseitig (auf dem Substrat, nicht näher dargestellt) das dreidimensionale Objekt 60 aufgebaut wird. Jeweils vor der Fertigung einer neuen Schicht des dreidimensionalen Objekts 60 wird der Kolben 64 mit einer zweiten Hebeeinrichtung (Hubeinrichtung) 91 um einen Schritt abgesenkt, und eine kleine Menge des pulverförmigen Materials 61 wird mit dem Schieber 97 in die Bauzylinder-Anordnung 63 gestrichen.

Sodann wird die neu aufgetragene Pulverschicht von oben mit einem Hochenergiestrahl 100, in der gezeigten Variante mit einem Bearbeitungslaserstrahl (hier aus einem lokalen Bearbeitungslaser 101 und durch ein Fenster 103 in die Prozesskammer 92 eindringend) an Stellen, die für eine lokale Verfestigung (Aufschmelzen, Aufsintern) des pulverförmigen Materials 61 vorgesehen sind, lokal beleuchtet und dadurch lokal stark erwärmt. Der Bearbeitungslaserstrahl wird dabei durch eine Scaneinrichtung 102, hier eine Scanneroptik (insbesondere enthaltend einen oder mehrere Spiegel, die insgesamt um wenigstens zwei Achsen verschwenkbar sind) über das Substrat geführt (gerastert).

Danach werden weitere Schichten gefertigt, bis das dreidimensionale Objekt 60 fertiggestellt ist. Überschüssiges pulverförmiges Material 61 kann mit dem Schieber 97 in einen Sammelbehälter 94 gestrichen werden.

Die **Fig**. **13** illustriert den Bereich des Kolbens 64 der Bauzylinder-Anordnung 63 näher. Der Kolben 64 umfasst das Kolben-Teil 3 des Bauzylinders 1, und weiterhin ein Kolben-Zwischenteil 70 mit einer Heizeinrichtung 70a, eine thermische Isolierung (hier eine keramische Isolierplatte) 73, und ein Kolben-Unterteil 71 mit einer aktiven Kühleinrichtung 71a (man beachte, dass die Kühleinrichtung in einer Variante auch entfallen kann) und einer Gasdichtung 72 aus Elastomermaterial. Der Kolben 64 kann zwischen dem Kolben-Teil 3 und Kolben-Zwischenteil 70 mit einer Arretiereinrichtung (nicht näher dargestellt, vgl. aber Fig. 8, Fig. 9) je nach Verfahrensfortschritt verbunden und separiert werden. Das Kolben-Zwischenteil 70 kann zudem in nicht näher dargestellter Weise gegenüber dem Kolben-Unterteil 71 ausgerichtet (insbesondere um zwei Achsen verkippt) werden.

Das Kolben-Zwischenteil 70 und das Kolben-Unterteil 71 verbleiben stets an der zweiten Hebeeinrichtung 91 (durchgezogen dargestellt in Fig. 13) bzw. an der 3D-Druck-Maschine, und das Kolben-Teil 3 verbleibt während Fertigung und Transport in seinem Bauzylinder 1 (gepunktet dargestellt in Fig. 13).

Für das Verfahren des Basiselements bzw. des Kolben-Teils 3 während der schichtweisen Fertigung des dreidimensionalen Objekts ist der Kolben 64 verbunden. Für einen Austausch des Bauzylinders 1 an der 3D-Druck-Maschine wird der Kolben 64 aufgetrennt, wobei das Kolben-Zwischenteil 70 und der Kolben-Unterteil 71 nach unten aus dem Bauzylinder 1 herausgefahren werden; das Kolben-Zwischenteil 70 und das Kolben-Unterteil 71 können die (nach radial außen) zurückgezogenen Auflagebolzen 39 passieren. Bei getrenntem Kolben 64 wird das Kolben-Teil 3 über die dann (nach radial innen) ausgefahrenen Auflagebolzen 39 gehalten (siehe Fig. 9).

**Fig. 14** zeigt eine Flurfördereinrichtung 80, hier ein manuelles Flurförderfahrzeug mit Handgriffen 82, mit dem ein Bauzylinder 1 an einer 3D-Druck-Maschine im Rahmen der Erfindung getauscht und transportiert werden kann. Die Flurfördereinrichtung 80 verfügt über eine Gabel 81, mit der der Tragring 12 am Bauzylinder 1 untergriffen werden kann. Die Gabel 12 ist hier höhenverstellbar ausgebildet.

### Bezugszeichenliste

- 1: Bauzylinder
- 2: Grundkörper
- 3: Kolben-Teil (Kolben-Oberteil)
- 4: Zylinderachse
- 5: Basiselement
- 6: Substrat
- 7: Isolationseinrichtung; hier: Isolationsring
- 8: Dichtungsträger
- 9: Pulverdichtung; hier: Metallfaserdichtung
- 10: Klemmbund
- 11: Auflagebolzenmechanik
- 12: Tragring
- 12a: Verschraubungslöcher
- 13: Steuerring
- 13a: Außenverzahnung
- 14: Deckel
- 15: Spalt (zwischen Substrat und Grundkörper)
- 16: Kolbeninnenraum
- 17: oberer Dichtungsträgerring
- 18: unterer Dichtungsträgerring
- 19: Führung
- 19a: Nut
- 20: gegenseitiges Anlageprofil (Substrat/Isolationseinrichtung)
- 20a: gegen die Schwerkraft verlaufender Teilabschnitt
- 20b: horizontaler Teilabschnitt
- 21: Raum
- 22: Innenseite
- 23: Spalt
- 24: gegenseitiges Anlageprofil (Dichtungsträger/Isolationseinrichtung)
- 24a: vertikaler Teilabschnitt
- 24b: horizontaler Teilabschnitt
- 24c: gegen die Schwerkraft verlaufender Teilabschnitt
- 25: Bajonettmechanik
- 26: oberer Tragringteil
- 27: unterer Tragringteil
- 28: Ausnehmung
- 29: Vertiefung
- 30: Lagerbolzen
- 31: Steuerkurven-Ausnehmung
- 32: Mitnehmer
- 33: Führungselement
- 34: Führungsausnehmung
- 35: erster Kopplungsbolzen
- 36: Federelement
- 37: zweiter Kopplungsbolzen
- 38: unterer Lagerring
- 39: Auflagebolzen
- 40: Arretiereinrichtung
- 41: mittlerer Lagerring
- 42: oberer Lagerring
- 43: Schraube
- 44: unteres Deckelteil
- 45: oberes Deckelteil
- 46: Dichtungsfolie
- 47: Schraube
- 48: deckelseitiger Auflageabschnitt
- 49: grundkörperseitiger Auflageabschnitt
- 50: linienhafter Krafteintrag
- 51: sich verengende Kontur am Grundkörper
- 52: sich verjüngende Kontur am Deckel
- 60: dreidimensionales Objekt
- 61: pulverförmiges Material
- 62: Boden
- 63: Bauzylinder-Anordnung
- 64: Kolben
- 65: Pulverzylinder
- 70: Kolben-Zwischenteil
- 70a: Heizeinrichtung
- 71: Kolben-Unterteil
- 71a: Kühleinrichtung
- 72: Gasdichtung
- 73: thermische Isolierung; hier: Isolierplatte
- 80: Flurfördereinrichtung
- 81: Gabel
- 82: Handgriff
- 90: Maschine (3D-Druckmaschine)
- 91: zweite Hebeeinrichtung
- 92: Prozesskammer
- 93: Pulverzylinder-Anordnung
- 94: Sammelbehälter
- 95: Pulver-Kolben
- 96: erste Hebeeinrichtung
- 97: Schieber
- 100: Hochenergiestrahl; hier: Laserstrahl
- 101: Bearbeitungslaser
- 102: Scaneinrichtung
- 103: Fenster
- ADG: Außendurchmesser des Grundkörper
- IDT: Innendurchmesser des Tragrings
- KD: Krümmungsradius des deckelseitigen Auflageabschnitts
- KG: Krümmungsradius des grundkörperseitigen Auflageabschnitts
- L: Länge des Lagerbolzens
- SP: radiales Spiel
- TA: Tiefe der Ausnehmung
- TV: Tiefe der Vertiefung

## Patentansprüche

1. Bauzylinder-Anordnung (63) für eine Maschine (90) zur schichtweisen Fertigung dreidimensionaler Objekte (60) durch Sintern oder Schmelzen von pulverförmigem Material (61) mit einem Hochenergiestrahl (100), insbesondere Laserstrahl, umfassend
a) einen Bauzylinder (1) mit einem im Wesentlichen zylindermantelförmigen Grundkörper (2) und einem an der Innenseite (22) des Grundkörpers (2) entlang einer Zylinderachse (4) verfahrbaren Kolben-Oberteil (3),
wobei das Kolben-Oberteil (3) an seiner Oberseite ein Basiselement (5), insbesondere ein Substrat (5) oder ein Preform, für das Aufwachsen eines dreidimensionalen Objekts (60) aufweist,
und wobei am Kolben-Oberteil (3) eine an der Innenseite (22) des Grundkörpers (2) anliegende Pulverdichtung (9) zur Abdichtung des pulverförmigen Materials (61) ausgebildet ist,
b) ein Kolben-Zwischenteil (70) mit einer Heizeinrichtung (70a),
c) eine thermische Isolierung (73), insbesondere eine keramische Isolierplatte, und
d) ein Kolben-Unterteil (71) mit einer Gasdichtung (72), insbesondere aus Elastomermaterial,
wobei das Kolben-Oberteil (3), das Kolben-Zwischenteil (70), die thermische Isolierung (73) und das Kolben-Unterteil (71) einen im Grundkörper (2) verfahrbaren Kolben (64) der Bauzylinder-Anordnung (63) bilden, der zwischen dem Kolben-Oberteil (3) und dem Kolben-Zwischenteil (70) mit einer Arretiereinrichtung (40) verbunden und separiert werden kann,
**dadurch gekennzeichnet,**
**dass** das Kolben-Oberteil (3) einen Dichtungsträger (8) aufweist, an welchem die Pulverdichtung (9) gelagert ist,
**dass** auf dem Dichtungsträger (8) eine keramische Isolationseinrichtung (7), insbesondere ein umlaufender Isolationsring, gelagert ist,
und **dass** auf der Isolationseinrichtung (7) das Basiselement (5) gelagert ist, wobei das Basiselement (5) vom Dichtungsträger (8) und von der Pulverdichtung (9) beabstandet ist.

2. Bauzylinder-Anordnung (63) nach Anspruch 1, **dadurch gekennzeichnet, dass** der Dichtungsträger (8) einen unteren Dichtungsträgerring (18) und einen oberen Dichtungsträgerring (17) aufweist, die aufeinander montiert sind und gemeinsam eine außenliegende Führung (19), insbesondere eine außen umlaufende Nut (19a), ausbilden, in die die Pulverdichtung (9) eingelegt ist.

3. Bauzylinder-Anordnung (63) nach einem der vorhergehenden Ansprüche, **dadurch gekennzeichnet, dass** ein gegenseitiges Anlageprofil (20) von Basiselement (5) und Isolationseinrichtung (7) im Verlauf von außen nach innen einen entgegen der Schwerkraft verlaufenden Teilabschnitt (20a), insbesondere einen vertikal nach oben verlaufenden Teilabschnitt (20a), aufweist,
und dass auch ein gegenseitiges Anlageprofil (24) von Dichtungsträger (8) und Isolationseinrichtung (7) im Verlauf von außen nach innen einen entgegen der Schwerkraft verlaufenden Teilabschnitt (24c), insbesondere einen vertikal nach oben verlaufenden Teilabschnitt (24c), aufweist.

4. Bauzylinder-Anordnung (63) nach einem der vorhergehenden Ansprüche, **dadurch gekennzeichnet,**
**dass** außen am Grundkörper (2) ein umlaufender Tragring (12) angeordnet ist, in welchem am Innenumfang verteilt mehrere radial nach außen gerichtete Ausnehmungen (28) für Lagerbolzen (30) ausgebildet sind,
**dass** im Grundkörper (2) um dem Außenumfang des Grundkörpers (2) verteilt mehrere radial nach innen gerichtete Vertiefungen (29) für Lagerbolzen (30) ausgebildet sind,
**dass** mehrere Lagerbolzen (30) vorhanden sind, wobei ein jeweiliger Lagerbolzen (30) in eine Ausnehmung (28) und eine der Ausnehmung (28) gegenüberliegende Vertiefung (29) einragt,
**dass** ein Innendurchmesser (IDT) des Tragrings (12) größer ist als ein Außendurchmesser (ADG) des Grundkörpers (2),
und **dass** ein jeweiliger Lagerbolzen (30) in Längsrichtung mit Spiel (SP) in seiner Ausnehmung (28) und seiner Vertiefung (29) gelagert ist.

5. Bauzylinder-Anordnung (63) nach Anspruch 4, **dadurch gekennzeichnet, dass** eine jeweilige Länge L eines Lagerbolzens (30) größer ist als die Summe der Tiefe TV seiner zugehörigen Vertiefung (29) und der Tiefe TA seiner zugehörigen Ausnehmung (28).

6. Bauzylinder-Anordnung (63) nach einem der vorhergehenden Ansprüche, **dadurch gekennzeichnet,**
**dass** am Grundkörper (2), insbesondere am unteren Ende des Grundkörpers (2), ein Steuerring (13), insbesondere ein scheibenförmiger Steuerring (13), drehbar um die Zylinderachse (4) gelagert ist,
**dass** der Steuerring (13) eine Außenverzahnung (13a) aufweist,
**dass** am Steuerring (13) in Umfangsrichtung verteilt mehrere Steuerkurven-Ausnehmungen (31) ausgebildet sind, wobei die Steuerkurven-Ausnehmungen (31) bei Fortschreiten in Umfangsrichtung ihre radiale Position ändern,
**dass** am Grundkörper (2), insbesondere am unteren Ende des Grundkörpers (2), in Umfangsrichtung verteilt mehrere Auflagebolzen (39) radial verfahrbar gelagert sind,
**dass** die Auflagebolzen (39) jeweils einen axial ausragenden Mitnehmer (32) aufweisen, der in eine Steuerkurven-Ausnehmung (31) des Steuerrings (13) eingreift,
und **dass** durch Drehen des Steuerrings (13) die Auflagebolzen (39) zwischen einer nach radial innen ausgefahrenen Stellung, in der der Kolben-Oberteil (3) auf den Auflagebolzen (39) aufliegen kann, und einer zurückgezogenen Stellung, in der der Kolben-Oberteil (3) die Auflagebolzen (39) passieren kann, verfahrbar sind.

7. Bauzylinder-Anordnung (63) nach Anspruch 6, **dadurch gekennzeichnet, dass** wenigstens ein Federelement (36) vorhanden ist, mit dem der Steuerring (13) in eine Drehposition vorgespannt wird, in der die Auflagebolzen (39) in der nach radial innen ausgefahrenen Stellung sind.

8. Bauzylinder-Anordnung (63) nach einem der vorhergehenden Ansprüche, **dadurch gekennzeichnet,**
**dass** der Bauzylinder (1) einen Deckel (14) zum Verschließen des Bauzylinders (1) an einer Oberseite aufweist,
**dass** eine umlaufende Dichtung, insbesondere Dichtungsfolie (46), vorgesehen ist, die bei aufgesetztem Deckel (14) zwischen einem deckelseitigen Auflageabschnitt (48) und einem grundkörperseitigen Auflageabschnitt (49) angeordnet ist,
und **dass** der deckelseitige Auflageabschnitt (48), insbesondere dessen Krümmung, und der grundkörperseitige Auflageabschnitt (49), insbesondere dessen Krümmung, so ausgebildet sind, dass sich bei aufgesetztem Deckel (14) ein im Wesentlichen linienhafter Krafteintrag (50) in die Dichtung, insbesondere Dichtungsfolie (46), ergibt.

9. Bauzylinder-Anordnung (63) nach Anspruch 8, **dadurch gekennzeichnet, dass** im Längsschnitt entlang der Zylinderachse (4) der Krümmungsradius (KD) des deckelseitigen Auflageabschnitts (48) und der Krümmungsradius (KG) des grundkörperseitigen Auflageabschnitts (49) im Bereich des linienhaften Krafteintrags (50) ein unterschiedliches Vorzeichen haben und sich betragsmäßig unterscheiden, insbesondere wobei der deckelseitige Auflageabschnitt (48) mit konvexer Krümmung mit größerem Betrag des Krümmungsradius (KD) und der grundkörperseitige Auflageabschnitt (49) mit konkaver Krümmung und kleinerem Betrag des Krümmungsradius (KG) ausgebildet sind.

10. Bauzylinder-Anordnung (63) nach Anspruch 8 oder 9, **dadurch gekennzeichnet,**
**dass** die Dichtung, insbesondere Dichtungsfolie (46), seitlich am Deckel (14) befestigt ist,
insbesondere wobei der Deckel (14) zumindest im radialen Randbereich mit einem oberen Deckelteil (45) und einem unteren Deckelteil (44) ausgebildet ist, die aufeinander montiert sind und zwischen denen ein Teil der Dichtung, insbesondere Dichtungsfolie (46), einklemmt ist.

11. Bauzylinder-Anordnung (63) nach einem der vorhergehenden Ansprüche, **dadurch gekennzeichnet, dass** das Kolben-Unterteil (71) mit einer aktiven Kühleinrichtung (71a) ausgebildet ist.

12. Bauzylinder-Anordnung (63) nach einem der vorhergehenden Ansprüche, **dadurch gekennzeichnet, dass** zwischen Kolben-Zwischenteil (70) und Kolben-Unterteil (71) die thermische Isolierung (73) angeordnet ist.

13. Maschine (90) zur schichtweisen Fertigung dreidimensionaler Objekte (60) durch Sintern oder Schmelzen von pulverförmigem Material (61) mit einem Hochenergiestrahl (100), insbesondere Laserstrahl, umfassend
- eine Prozesskammer (92), mit einem Pulverzylinder-Anschluss für einen Pulverzylinder (65), einem Bauzylinder-Anschluss für einen Bauzylinder (1) und einem Schieber (97) zum Aufbringen einer Schicht des pulverförmigen Materials (61) im Bauzylinder (1),
- wenigstens einen Pulverzylinder (65) für das pulverförmige Material (61), mit einem im Pulverzylinder (65) beweglichen Pulver-Kolben (95),
- wenigstens eine Bauzylinder-Anordnung (63) nach einem der vorhergehenden Ansprüche,
- eine Hochenergiestrahl-Quelle, insbesondere ein Bearbeitungslaser (101),
- eine Scaneinrichtung (102) für den Hochenergiestrahl (100), insbesondere eine Scanneroptik,
- eine erste Hebeeinrichtung (96) für den Pulver-Kolben (95) eines am Pulverzylinder-Anschluss montierten Pulverzylinders (65);
- eine zweite Hebeeinrichtung (91) für das Kolben-Oberteil (3) eines am Bauzylinder-Anschluss montierten Bauzylinders (1).

14. Maschine (90) nach Anspruch 13, **dadurch gekennzeichnet,**
**dass** die zweite Hebeeinrichtung (91) umfasst
- das Kolben-Zwischenteil (70) mit der Heizeinrichtung (70a) für das Basiselement (5) eines arretierten Kolben-Oberteils (3),
- das Kolben-Unterteil (71) mit einer Kühleinrichtung (71a),
wobei zwischen dem Kolben-Zwischenteil (70) und dem Kolben-Unterteil (71) die thermische Isolierung (73), insbesondere die keramische Isolierplatte, angeordnet ist,
und wobei für den Bauprozess das Kolben-Zwischenteil (70) zusammen mit dem arretierten Kolben-Oberteil (3) und dem Kolben-Unterteil (71) im Grundkörper (2) eines am Bauzylinder-Anschluss angeschlossenen Bauzylinders (1) verfahrbar ist.

15. Maschinen-Anordnung, umfassend eine Maschine (90) nach einem der Ansprüche 13 oder 14, mehrere Bauzylinder (1), und weiterhin wenigstens eine Flurfördereinrichtung (80), mit der ein Bauzylinder (1) zur Maschine (90), insbesondere zum Bauzylinder-Anschluss, und/oder von der Maschine (90) weg, insbesondere vom Bauzylinder-Anschluss weg, verbracht werden kann,
insbesondere wobei die Flurfördereinrichtung (80) eine Gabel (81) zum Untergreifen eines Tragrings (12) eines Bauzylinders (1) aufweist,
und insbesondere wobei die Flurfördereinrichtung (80) einen Greifer aufweist, mit dem ein Deckel (14) des Bauzylinders (1) niedergehalten werden kann.

## Claims

1. Building cylinder arrangement (63) for a machine (90) for the layer-by-layer production of three-dimensional objects (60) by sintering or melting powdered material (61) by means of a high-energy beam (100), in particular laser beam, comprising
a) a building cylinder (1) with a main body (2) substantially in the form of a cylindrical casing and with an upper piston part (3) movable on the inner side (22) of the main body (2) along a cylinder axis (4),
the upper piston part (3) having, on its upper side, a base element (5), in particular a substrate (5) or a preform, for the growth of a three-dimensional object (60),
and on the upper piston part (3) there being formed a powder seal (9) bearing against the inner side (22) of the main body (2) for sealing the powdered material (61),
b) an intermediate piston part (70) comprising a heating means (70a),
c) a thermal insulation (73), in particular a ceramic insulation plate, and
d) a lower piston part (71) comprising a gas seal (72), in particular of elastomer material,
the upper piston part (3), the intermediate piston part (70), the thermal insulation (73) and the lower piston part (71) forming a piston (64) of the building cylinder arrangement (63), which piston (64) is displaceable in the main body (2) and can be connected and separated between the upper piston part (3) and the intermediate piston part (70) by means of a locking means (40),
**characterized in that**
the upper piston part (3) has a seal carrier (8), on which the powder seal (9) is mounted,
**in that** a ceramic insulation means (7), in particular a circumferential insulation ring, is mounted on the seal carrier (8),
and **in that** the base element (5) is mounted on the insulation means (7), the base element (5) being at a distance from the seal carrier (8) and from the powder seal (9).

2. Building cylinder arrangement (63) according to claim 1, **characterized in that** the seal carrier (8) has a lower seal carrier ring (18) and an upper seal carrier ring (17), which are mounted on top of one another and together form an external guide (19), in particular an external circumferential groove (19a), in which the powder seal (9) is laid.

3. Building cylinder arrangement (63) according to any of the preceding claims, **characterized in that** a mutual contact profile (20) of the base element (5) and the insulation means (7) has a sub-portion (20a) extending counter to gravity, in particular a sub-portion (20a) extending vertically upward, in the progression from outside to inside, and **in that** a mutual contact profile (24) of the seal carrier (8) and the insulation means (7) also has a sub-portion (24c) extending counter to gravity, in particular a sub-portion (24c) extending vertically upward, in the progression from outside to inside.

4. Building cylinder arrangement (63) according to any of the preceding claims, **characterized**
**in that** on the outside of the main body (2) a circumferential carrier ring (12) is arranged in which, distributed on the internal circumference, a plurality of radially outwardly directed recesses (28) for bearing bolts (30) are formed,
**in that** in the main body (2), distributed on the external circumference of the main body (2), a plurality of radially inwardly directed depressions (29) for bearing bolts (30) are formed,
**in that** a plurality of bearing bolts (30) are provided, each bearing bolt (30) penetrating into a recess (28) and into a depression (29) opposite the recess (28),
**in that** an internal diameter (IDT) of the carrier ring (12) is greater than an external diameter (ADG) of the main body (2),
and **in that** each bearing bolt (30) is mounted in the recess (28) and depression (29) thereof with play (SP) in the longitudinal direction.

5. Building cylinder arrangement (63) according to claim 4, **characterized in that** a length L of each bearing bolt (30) is greater than the sum of the depth TV of the associated depression (29) and the depth TA of the associated recess (28).

6. Building cylinder arrangement (63) according to any of the preceding claims, **characterized**
**in that** on the main body (2), in particular on the lower end of the main body (2), a control ring (13), in particular a disk-shaped control ring (13), is mounted rotatably about the cylinder axis (4),
**in that** the control ring (13) has an external toothing (13a),
**in that** on the control ring (13), distributed in the circumferential direction, a plurality of control curve recesses (31) are formed, the control curve recesses (31) changing the radial position thereof as they progress in the circumferential direction,
**in that** on the main body (2), in particular on the lower end of the main body (2), distributed in the circumferential direction, a plurality of support bolts (39) are mounted radially displaceably, in that the support bolts (39) each have an axially projecting tappet (32), which engages in a control curve recess (31) of the control ring (13),
and **in that**, by rotating the control ring (13), the support bolts (39) can be displaced between a radially inwardly extended position, in which the upper piston part (3) can lie on the support bolts (39), and a retracted position, in which the upper piston part (3) can pass the support bolts (39).

7. Building arrangement (63) according to claim 6, **characterized in that** at least one spring element (36) is provided, by means of which the control ring (13) is biased into a rotational position in which the support bolts (39) are in the radially inwardly extended position.

8. Building cylinder arrangement (63) according to any of the preceding claims, **characterized**
**in that** the building cylinder (1) has a cover (14) for sealing the building cylinder (1) at an upper side,
**in that** a circumferential seal, in particular sealing film (46), is provided, which is arranged between a cover-side support portion (48) and a main-body-side support portion (49) when the cover (14) is placed on,
and **in that** the cover-side support portion (48), in particular the curvature thereof, and the main-body-side support portion (49), in particular the curvature thereof, are formed in such a way that when the cover (14) is placed on there is a substantially linear force input (50) into the seal, in particular sealing film (46).

9. Building cylinder arrangement (63) according to claim 8, **characterized in that**, in the longitudinal section along the cylinder axis (4), the radius of curvature (KD) of the cover-side support portion (48) and the radius of curvature (KG) of the main-body-side support portion (49) have a different sign and differ in magnitude in the region of the linear force input (50), in particular the cover-side support portion (48) being formed with convex curvature with a larger magnitude of the radius of curvature (KD) and the main-body-side support portion (49) being formed with concave curvature and a smaller magnitude of the radius of curvature (KG).

10. Building cylinder arrangement (63) according to either claim 8 or claim 9, **characterized**
**in that** the seal, in particular sealing film (46), is fastened laterally on the cover (14),
in particular the cover (14), at least in the radial edge region, being formed with an upper cover part (45) and a lower cover part (44) that are mounted on top of one another and between which a part of the seal, in particular sealing film (46), is clamped.

11. Building cylinder arrangement (63) according to any of the preceding claims, **characterized in that** the lower piston part (71) is formed with an active cooling means (71a).

12. Building cylinder arrangement (63) according to any of the preceding claims, **characterized in that** the thermal insulation (73) is arranged between the intermediate piston part (70) and the lower piston part (71).

13. Machine (90) for layer-by-layer production of three-dimensional objects (60) by sintering or melting powdered material (61) by means of a high-energy beam (100), in particular laser beam, comprising
- a process chamber (92), comprising a powder cylinder connector for a powder cylinder (65), a building cylinder connector for a building cylinder (1), and a slider (97) for applying a layer of the powdered material (61) in the building cylinder (1),
- at least one powder cylinder (65) for the powdered material (61), comprising a powder piston (95) that is movable in the powder cylinder (65),
- at least one building cylinder arrangement (63) according to any of the preceding claims,
- a high-energy beam source, in particular a machining laser (101),
- a scanning means (102) for the high-energy beam (100), in particular scanner optics,
- a first lifting means (96) for the powder piston (95) of a powder cylinder (65) mounted on the powder cylinder connector;
- a second lifting means (91) for the upper piston part (3) of a building cylinder (1) mounted on the building cylinder connector.

14. Machine (90) according to claim 13, **characterized**
**in that** the second lifting means (91) comprises
- the intermediate piston part (70) comprising the heating means (70a) for the base element (5) of a locked upper piston part (3),
- the lower piston part (71) comprising a cooling means (71a),
the thermal insulation (73), in particular the ceramic insulation plate, being arranged between the intermediate piston part (70) and the lower piston part (71),
and the intermediate part (70) being displaceable, for the building process, together with the locked upper piston part (3) and the lower piston part (71) in the main body (2) of a building cylinder (1) connected to the building cylinder connector.

15. Machine arrangement comprising a machine (90) according to either claim 13 or 14, a plurality of building cylinders (1), and furthermore at least one floor conveyance means (80), by means of which a building cylinder (1) can be brought to the machine (90), in particular to the building cylinder connector, and/or away from the machine (90), in particular away from the building cylinder connector,
in particular the floor conveyance means (80) having a fork (81) for engaging a carrier ring (12) of a building cylinder (1) from below,
and in particular the floor conveyance means (80) having a gripper by means of which a cover (14) of the building cylinder (1) can be held down.

## Revendications

1. Ensemble (63) à vérin de façonnage dévolu à une machine (90) de production, couche par couche, d'objets tridimensionnels (60) par frittage ou fusion d'un matériau pulvérulent (61) à l'aide d'un faisceau (100) de haute énergie, d'un faisceau laser en particulier, comprenant
a) un vérin de façonnage (1) présentant un corps de base (2) revêtant sensiblement la forme d'une enveloppe cylindrique, et une partie supérieure (3) de piston pouvant être déplacée à la face intérieure (22) dudit corps de base (2), le long d'un axe cylindrique (4), sachant que ladite partie supérieure (3) de piston est munie, à sa face supérieure, d'un élément d'embase (5), notamment d'un substrat (5) ou d'une préforme affecté(e) à la croissance d'un objet tridimensionnel (60),
et sachant qu'une garniture (9) de scellement de poudre, en applique contre la face intérieure (22) du corps de base (2), est ménagée sur ladite partie supérieure (3) de piston en vue d'assurer le scellement du matériau pulvérulent (61),
b) une partie intermédiaire (70) de piston, équipée d'un dispositif de chauffage (70a),
c) une isolation thermique (73), en particulier une plaque isolante en céramique, et
d) une partie inférieure (71) de piston, pourvue d'une garniture (72) d'étanchement aux gaz notamment constituée d'un matériau élastomère,
la partie supérieure (3) de piston, la partie intermédiaire (70) de piston, l'isolation thermique (73) et la partie inférieure (71) de piston donnant naissance à un piston (64) dudit ensemble (63) à vérin de façonnage qui peut être déplacé dans le corps de base (2), est relié à un dispositif d'arrêt (40) entre ladite partie supérieure (3) du piston et ladite partie intermédiaire (70) dudit piston, et peut être dissocié,
**caractérisé par le fait**
**que** la partie supérieure (3) du piston est dotée d'un support (8) de garniture de scellement, sur lequel la garniture (9) de scellement de la poudre est mise en place ;
par le fait qu'un dispositif d'isolation (7) en céramique, notamment une bague isolante périphérique, est mis(e) en place sur ledit support (8) de la garniture de scellement ;
et par le fait que l'élément d'embase (5) est mis en place sur ledit dispositif d'isolation (7), lequel élément d'embase (5) est situé à distance dudit support (8) de la garniture de scellement, et de ladite garniture (9) de scellement de la poudre.

2. Ensemble (63) à vérin de façonnage, selon la revendication 1,
**caractérisé par le fait**
**que** le support (8) de la garniture de scellement comprend un anneau inférieur (18) et un anneau supérieur (17), qui sont montés en superposition mutuelle et donnent associativement naissance à un guide (19) situé à l'extérieur, notamment à une rainure (19a) extérieurement circonférentielle dans laquelle la garniture (9) de scellement de la poudre est intégrée.

3. Ensemble (63) à vérin de façonnage, selon l'une des revendications précédentes,
**caractérisé par le fait**
**qu'**un profil (20) de venue en contact réciproque de l'élément d'embase (5) et du dispositif d'isolation (7) présente, sur le tracé de l'extérieur vers l'intérieur, une région partielle (20a) contrecarrant la gravité, en particulier une région partielle (20a) s'étendant verticalement vers le haut ;
et par le fait qu'un profil (24) de venue en contact réciproque du support (8) de la garniture de scellement et dudit dispositif d'isolation (7) présente lui aussi, sur le tracé de l'extérieur vers l'intérieur, une région partielle (24c) contrecarrant la gravité, en particulier une région partielle (24c) s'étendant verticalement vers le haut.

4. Ensemble (63) à vérin de façonnage, selon l'une des revendications précédentes,
**caractérisé par le fait**
**qu'**une bague périphérique de support (12), dans laquelle sont pratiqués plusieurs évidements (28) dédiés à des boulons de montage (30) et dirigés radialement vers l'extérieur avec répartition sur le pourtour intérieur, est implantée extérieurement sur le corps de base (2) ;
par le fait que plusieurs renfoncements (29), assignés à des boulons de montage (30) et dirigés radialement vers l'intérieur avec répartition autour de la circonférence extérieure dudit corps de base (2), sont ménagés dans ledit corps de base (2) ;
par le fait que plusieurs boulons de montage (30) sont présents, un boulon de montage (30) considéré pénétrant dans un évidement (28) et dans un renfoncement (29) situé en vis-à-vis dudit évidement (28) ;
par le fait qu'un diamètre intérieur (IDT) de ladite bague de support (12) est plus grand qu'un diamètre extérieur (ADG) dudit corps de base (2) ;
et par le fait qu'un boulon de montage (30) considéré est monté, dans son évidement (28) et dans son renfoncement (29), avec jeu (SP) dans la direction longitudinale.

5. Ensemble (63) à vérin de façonnage, selon la revendication 4,
**caractérisé par le fait**
**qu'**une longueur considérée L d'un boulon de montage (30) est supérieure à la somme de la profondeur TV du renfoncement (29) qui lui est associé et de la profondeur TA de l'évidement (28) qui lui est associé.

6. Ensemble (63) à vérin de façonnage, selon l'une des revendications précédentes,
**caractérisé par le fait**
**qu'**une bague de commande (13), notamment une bague discoïdale de commande (13), est montée à rotation autour de l'axe cylindrique (4) sur le corps de base (2), en particulier à l'extrémité inférieure dudit corps de base (2) ;
par le fait que la bague de commande (13) comporte une denture extérieure (13a) ;
par le fait que plusieurs évidements (31), affectés à des cames de commande, sont pratiqués dans ladite bague de commande (13) avec répartition dans la direction périphérique, sachant que l'emplacement radial desdits évidements (31), affectés à des cames de commande, varie au fur et à mesure de la progression dans ladite direction périphérique ;
par le fait que plusieurs tenons de support (39), répartis dans la direction périphérique, sont implantés avec faculté de déplacement radial sur le corps de base (2), en particulier à l'extrémité inférieure dudit corps de base (2) ;
par le fait que lesdits tenons de support (39) sont munis, à chaque fois, d'un organe d'entraînement (32) qui fait saillie axialement et pénètre dans un évidement (31) de la bague de commande (13), affecté à une came de commande ;
et par le fait que les tenons de support (39) peuvent être déplacés, par rotation de ladite bague de commande (13), entre une position déployée radialement vers l'intérieur, dans laquelle la partie supérieure (3) du piston peut être en applique sur lesdits tenons de support (39), et une position rétractée dans laquelle ladite partie supérieure (3) du piston peut passer outre lesdits tenons de support (39).

7. Ensemble (63) à vérin de façonnage, selon la revendication 6,
**caractérisé par**
la présence d'au moins un élément élastique (36) par lequel la bague de commande (13) est précontrainte vers un emplacement pris par rotation, auquel les tenons de support (39) occupent la position déployée radialement vers l'intérieur.

8. Ensemble (63) à vérin de façonnage, selon l'une des revendications précédentes,
**caractérisé par le fait**
**que** le vérin de façonnage (1) est muni d'un couvercle (14) dévolu à l'obturation dudit vérin de façonnage (1) au niveau d'une face supérieure ;
par le fait qu'il est prévu une garniture périphérique d'étanchement, en particulier un film d'étanchement (46) interposé(e), lorsque ledit couvercle (14) est en place, entre une région de support (48) située côté couvercle et une région de support (49) située côté corps de base ;
et par le fait que ladite région de support (48) située côté couvercle, notamment la courbure de cette dernière, et ladite région de support (49) située côté corps de base, notamment la courbure de celle-ci, sont conçues de manière à provoquer, lorsque ledit couvercle (14) est en place, une introduction de force (50) substantiellement linéaire dans ladite garniture d'étanchement, en particulier dans ledit film d'étanchement (46).

9. Ensemble (63) à vérin de façonnage, selon la revendication 8,
**caractérisé par le fait**
**que**, considérés en coupe longitudinale le long de l'axe cylindrique (4), le rayon de courbure (KD) de la région de support (48) située côté couvercle et le rayon de courbure (KG) de la région de support (49) située côté corps de base ont un signe différent dans la zone d'introduction de force linéaire (50), et présentent des valeurs différentes,
sachant notamment que ladite région de support (48) située côté couvercle est réalisée avec courbure convexe, dont le rayon de courbure (KD) présente une valeur supérieure, et que ladite région de support (49) située côté corps de base est réalisée avec courbure concave, dont le rayon de courbure (KG) présente une valeur moindre.

10. Ensemble (63) à vérin de façonnage, selon la revendication 8 ou 9,
**caractérisé par le fait**
**que** la garniture d'étanchement, notamment le film d'étanchement (46), est fixé(e) au couvercle (14) dans le sens latéral,
sachant notamment que ledit couvercle (14) est pourvu, au moins dans la région marginale radiale, d'une partie supérieure (45) et d'une partie inférieure (44) qui sont montées l'une sur l'autre et entre lesquelles est enserrée une partie de ladite garniture d'étanchement, notamment dudit film d'étanchement (46).

11. Ensemble (63) à vérin de façonnage, selon l'une des revendications précédentes,
**caractérisé par le fait**
**que** la partie inférieure (71) du piston est équipée d'un dispositif actif de refroidissement (71a).

12. Ensemble (63) à vérin de façonnage, selon l'une des revendications précédentes,
**caractérisé par le fait**
**que** l'isolation thermique (73) est interposée entre la partie intermédiaire (70) du piston et la partie inférieure (71) dudit piston.

13. Machine (90) de production, couche par couche, d'objets tridimensionnels (60) par frittage ou fusion d'un matériau pulvérulent (61) à l'aide d'un faisceau (100) de haute énergie, d'un faisceau laser en particulier, comprenant
- une chambre de traitement (92) munie d'un raccord destiné à un vérin (65) délivreur de poudre, d'un raccord dédié à un vérin de façonnage (1), et d'une vanne à tiroir (97) conçue pour déposer une couche du matériau pulvérulent (61) dans ledit vérin de façonnage (1),
- au moins un vérin (65) délivreur de poudre, dévolu audit matériau pulvérulent (61) et doté d'un piston (95) délivreur de poudre, mobile dans ledit vérin (65) délivreur de poudre,
- au moins un ensemble (63) à vérin de façonnage, conforme à l'une des revendications précédentes,
- une source de faisceaux de haute énergie, en particulier un laser de traitement (101),
- un dispositif (102) d'exploration par balayage, notamment une optique de balayage assigné(e) au faisceau (100) de haute énergie,
- un premier dispositif de levage (96), associé au piston (95) délivreur de poudre d'un vérin (65) délivreur de poudre monté sur le raccord destiné audit vérin délivreur de poudre,
- un second dispositif de levage (91), associé à la partie supérieure (3) du piston d'un vérin de façonnage (1) monté sur le raccord dédié audit vérin de façonnage.

14. Machine (90) selon la revendication 13,
**caractérisée par le fait**
**que** le second dispositif de levage (91) comprend
- la partie intermédiaire (70) du piston, équipée du dispositif de chauffage (70a) dédié à l'élément d'embase (5) d'une partie supérieure (3) du piston à l'état arrêté,
- la partie inférieure (71) dudit piston, équipée d'un dispositif de refroidissement (71a), sachant que l'isolation thermique (73), en particulier la plaque isolante en céramique, est interposée entre ladite partie intermédiaire (70) du piston et ladite partie inférieure (71) dudit piston,
et sachant que, pour l'exécution du processus de façonnage, ladite partie intermédiaire (70) du piston peut être déplacée, conjointement à ladite partie supérieure (3) dudit piston à l'état arrêté et à ladite partie inférieure (71) dudit piston, dans le corps de base (2) d'un vérin de façonnage (1) monté sur le raccord dédié audit vérin de façonnage.

15. Agencement de machines comprenant une machine (90) conforme à l'une des revendications 13 ou 14, plusieurs vérins de façonnage (1) et, par ailleurs, au moins un dispositif (80) de convoyage au sol à l'aide duquel un vérin de façonnage (1) peut être mû vers la machine (90), en particulier vers le raccord dédié audit vérin de façonnage, et/ou à l'écart de ladite machine (90), notamment dudit raccord dédié audit vérin de façonnage,
sachant notamment que le dispositif (80) de convoyage au sol est muni d'une fourche (81) conçue pour venir en prise, par-dessous, avec une bague de support (12) d'un vérin de façonnage (1),
et sachant notamment que ledit dispositif (80) de convoyage au sol est pourvu d'un organe de préhension, à l'aide duquel un couvercle (14) dudit vérin de façonnage (1) peut être maintenu en position basse.
